# EUROPÄISCHE PATENTSCHRIFT

(11) **EP 2 870 074 B1**
(45) Veröffentlichungstag und Bekanntmachung des Hinweises auf die Patenterteilung: **19.04.2017**
(21) Anmeldenummer: 13703129.0
(22) Anmeldetag: 03.01.2013
(51) Int. Cl.: B65D 13/02, C12H 1/22

(54) **FLÜSSIGKEITSBEHÄLTER AUS NATURSTEINMATERIAL, VERFAHREN ZU DESSEN HERSTELLUNG UND SEINE VERWENDUNG IN EINEM VERFAHREN ZUM HERSTELLEN ODER LAGERN EINER ALKOHOLHALTIGEN TRINKFLÜSSIGKEIT**
LIQUID CONTAINER MADE OF NATURAL STONE MATERIAL, METHOD FOR THE PRODUCTION THEREOF AND USE THEREOF IN A METHOD FOR PRODUCING OR STORING AN ALCOHOLIC DRINKING LIQUID
RÉCIPIENT À LIQUIDES RÉALISÉ EN UN MATÉRIAU DE PIERRE NATURELLE, SON PROCÉDÉ DE FABRICATION ET SON UTILISATION DANS UN PROCÉDÉ PERMETTANT DE PRÉPARER OU DE STOCKER UNE BOISSON ALCOOLISÉE

(43) Veröffentlichungstag der Anmeldung: 13.05.2015
(60) Teilanmeldung: 17000389.1
(73) Patentinhaber: Bauer, Alois, 94036 Passau (DE)
(72) Erfinder: Bauer, Alois, 94036 Passau (DE)
(74) Vertreter: Klauer, Stephan
(86) Internationale Anmeldenummer: PCT/IB2013/000008
(87) Internationale Veröffentlichungsnummer: WO 2014/106764

(56) Entgegenhaltungen:
- EP-A1- 0 305 973
- WO-A2-03/079826
- AU-B2- 558 428
- DE-A1- 3 434 170
- DE-U1- 9 306 962
- FR-A- 492 075
- FR-A- 1 031 383
- JP-A- H0 810 293
- KR-A- 20110 139 852
- US-B1- 6 493 911
- Stephanie Geurts, Bad Münstereifel: "DerSteinMann Natursteinhandel", , 31. Dezember 2004 (2004-12-31), XP002713169, Gefunden im Internet: URL:http://www.dersteinmann.de/index.html [gefunden am 2013-09-18]
- Othmar Kiem: "Die Weine vom Karst", , 18. Juli 2011 (2011-07-18), XP002713175, Gefunden im Internet: URL:http://www.falstaff.at/weinartikel/die -weine-vom-karst-3248.html [gefunden am 2013-09-18]
- NN: "Kaltvergärung", Weinlexikon , 15. Mai 2007 (2007-05-15), XP002717049, Gefunden im Internet: URL:http://www.kath.de/weinlexikon/kaltver gaerung_weinlexikon.php [gefunden am 2013-11-27]

## Beschreibung

Die Erfindung bezieht sich auf einen Flüssigkeitsbehälter zur Herstellung und/oder Lagerung einer zum Trinkkonsum vorgesehenen Flüssigkeit, auf Verfahren zu dessen Herstellung und auf eine Verwendung desselben, sowie auf ein Verfahren zur Herstellung einer zum Trinkkonsum vorgesehenen Flüssigkeit.

### Stand der Technik

Es sind Flüssigkeitsbehälter zur Herstellung und/oder Lagerung von zum Trinkkonsum vorgesehenen Flüssigkeiten, insbesondere alkoholhaltigen Getränken, wie etwa Bier, Wein, Fruchtwein, Whisky, Schnaps, fermentierten Getränken, Mischgetränken, wie etwa Saftschorlen oder mit weiteren Geschmacksstoffen geschmacklich veränderte Biere, bekannt. Die bekannten Flüssigkeitsbehälter, wie etwa Fässer, sind typischerweise aus einem der folgenden Materialen bzw. Werkstoffe hergestellt: Holz, Stahl (insbesondere Edelstahl), Kunststoff oder Beton. Bei einem traditionellen Verfahren zur Herstellung von Wein werden auch Amphoren aus gebranntem Ton (z.B. Terrakotta) bzw. Steingut verwendet.

Auf den Internet-Seiten von "Der SteinMann Natursteinhandel" (http://www.dersteinmann.de, Stephanie Geurts, Bad Münstereifel, Deutschland) ist ein runder Natursteintrog aus Granit offenbart, der einen Durchmesser von ca. 65 cm, eine Höhe von ca. 50 cm und eine Innenhöhe von ca. 40 cm aufweist und an seiner Unterseite einen Ablauf aufweisen kann und der als Wasserbehältnis oder als Gartendekorationsgegenstand bzw. als Schöpfgefäß bei Handschwengelpumpen verwendet werden kann. Ferner sind als Wasserbehältnisse alte Natursteinbrunnen aus Granit, Tuffstein, Blaustein oder Basalt; und Natursteintröge aus Blaustein in eckiger Ausführung, mit Längen von ca. 160 cm, Breiten von ca. 70 cm, Höhen von ca. 40 cm und Innenhöhen von ca. 25 cm offenbart.

US 6 493 911 B1 offenbart einen Behälter, der als Bestattungsurne vorgesehen und zum Übereinanderstapeln zum Ausbilden von Säulen ausgebildet ist. Der Behälter besteht aus einem hohlzylinderförmigen Block, an dessen erstem Ende ein Deckel aufgesetzt und abgedichtet wird, und dessen zweites Ende mit einer inneren Dichtung verschlossen wird. Der hohlzylindrische Block, der Deckel und die innere Dichtung sind aus Naturstein, wie etwa Granit, Basalt, Sandstein, Marmor oder Kalkstein, hergestellt. Der Deckel wird z.B. aus einer Steinscheibe hergestellt, die seitlich angekerbt wird, sodass ein Zusammenfügabschnitt, ein Dichtabschnitt und eine ringförmige Schulter ausgebildet wird. Der Deckel wird am ersten Ende des Blocks eingepasst, so dass der Dichtabschnitt im Inneren des Blocks angeordnet ist und der Zusammenfügabschnitt herausragt, und dann mittels Mörtel, Zement, einem Binder, einem Harz oder einem Epoxybinder abgedichtet.

JP H08 10293 offenbart eine aus Stein hergestellte Bestattungsurne, die aus Stein, wie etwa aus Granit mit hoher Härte, hergestellt werden kann. Die Urne umfasst ein zylindrisch ausgebildetes Hauptteil, eine Bodenplatte, die zum Verschließen der Bodenseite des Hauptteils an dessen Unterseite eingesetzt ist, und ein Deckelteil, das zum Verschließen der Oberseite des Hauptteils frei aufgesetzt und entfernt werden kann und das eine umlaufende, ringförmige Einkerbung aufweist, wobei beim Aufsetzen der von der Einkerbung umringte Abschnitt in den Innenraum des Hauptteils eintaucht.

DE 93 06 962 U1 offenbart einen aus Kunststein- oder Natursteinplatten zusammengesetzten Behälter zur Verwendung als Pflanztrog oder Springbrunnen. Vorbekannt war, derartige Platten miteinander zu verschrauben oder zu verkleben. Neu vorgeschlagen wird in diesem Gebrauchsmuster ein Behälter aus Kunst- oder Naturstein, der folgendes aufweist: eine äußere Hülle, die aus mehreren an deren Schmalseiten aneinander stoßenden Kunststeinplatten oder Natursteinplatten besteht, eine die Innenseite der äußeren Hülle überdeckende innere Hülle, die ebenfalls aus mehreren Steinplatten zusammengesetzt ist, eine Armierung, die zwischen der äußeren Hülle und der inneren Hülle angeordnet ist, und einen Kleber, der zwischen der äußeren und der inneren Hülle vorgesehen ist und die Steinplatten der äußeren Hülle, die Armierung und die (Steinplatten der) inneren Hülle fest miteinander verklebt. Die innere Hülle kann aus fünf Steinplatten, nämlich vier Seitenplatten und einer Bodenplatte bestehen.

FR 492 075 A offenbart Behälter zur Lagerung von zum Trinkkonsum vorgesehenen Flüssigkeiten, wie etwa große Lagerfässer oder Fässer, die in Kellern oder Geschäften oder beim Transport von Wein, Cidre oder Birnenmost dienen. Die Behälter sind anstelle von Holz aus eisenverstärktem Zement oder Beton hergestellt.

Der Artikel "Die Weine vom Karst", Othmar Kiem (http://www.falstaff.at/weinartikel/die-weinevom-karst-3248.html) erwähnt, dass in der Landschaft des Karst (eine Hochebene im Hinterland des Golfs von Triest) ein Winzer lokale Weine in einem eigens angefertigten Steinfass vergärt, um das Terroirprinzip fortzuführen und die Mineralik im Wein zu verstärken.

KR 2011 0139852 A offenbart ein Verfahren zum Herstellen von traditionellem koreanischen Wein, bei dem Steinmaterialien Verwendung finden, um dem Wein Mineralien zuzufügen und um Geruch von und Verunreinigungen aus dem Wein zu entfernen. Das Verfahren umfasst das Bereitstellen von einer Fermentationsquelle ("Nuruk") und einem Fermentations-Tank, das Vermischen der Fermentationsquelle mit Wasser in dem Fermentations-Tank, und das Fermentieren des Gemischs. Der Tank ist monolithisch aus einem Steinmaterial, das aus einem porösen Material hergestellt ist und Mineralien enthält. In Ausführungsformen des Fermentationsverfahrens wird in Steinbehälter mit verschiedenen Wanddicken ein Thermostat mit 50∼70°C eingebracht, ein Isolationsmaterial als Abdeckung aufgelegt und die resultierende Temperatur als Funktion der Zeit gemessen. Bei einem Steinbehälter mit 1 cm Wanddicke erfolgt im Innern des Steinbehälters innerhalb von 1,5 Minuten ein relativ rascher Temperaturanstieg von 25°C auf ca. 38°C, gefolgt von einem relativ langsamen Absinken auf ca. 28°C binnen etwa 13 Minuten. Bei einem Steinbehälter mit 5 cm Wanddicke erfolgt ein relativ rascher Temperaturanstieg von 25°C auf ca. 29°C, gefolgt von einem relativ langsamen Absinken auf ca. 26°C binnen etwa 12 Minuten. Diese Ergebnisse werden so interpretiert, dass (i) im Inneren des Steinbehälter eine ausgeglichene Temperatur gehalten wird, unabhängig von externen Temperaturveränderungen, besonders wenn die Wanddicke des Granits sehr dick ist, so dass eine optimale Wachstumsumgebung für Mikroorganismen bereitgestellt ist, dass (ii) mit 5 cm Granit-Wanddicke ein exzellenter Wärmepuffer bereitgestellt ist, und (iii) dass ein Puffereffekt und ein Wärmestrahlungs-Abschirmungseffekt den fermentierten Inhalt stabilisieren und Temperaturstress vermeiden kann.

Der in einem Weinlexikon gefundene Fachartikel mit dem Titel "Kaltvergärung" (http://www.kath.de/weinlexikon/kaltvergaerung_weinlexikon.php) offenbart, dass mittels einer temperaturgesteuerten Gärführung eine Kontrolle der alkoholischen Gärung erzielt werden kann, wobei der Most während der Gärung auf eine Temperatur von ca. 15°C abgekühlt wird. Dadurch verläuft die Gärung langsamer und ein Aromaverlust wird auf ein Minimum begrenzt. Die Kaltgärung wird technisch umgesetzt in Form einer Wasserkühlung eines Edelstahltanks (weil dieses Material eine gute Wärmeleitfähigkeit hat), und zwar durch Aufstäuben von Wasser und Ausnutzung der Verdunstungskälte oder durch Berieseln des Tanks mit kühlem Wasser. Ohne Kühlungsmaßnahmen ist der Wärmeverlust des zu Wein vergärenden Traubensafts über die Tankwand oder das Holzfass nach außen gering, so dass sich der gärende Most langsam aufheizt. Dabei vermehren die Hefezellen sich sprunghaft, und es kommt zu einer sogenannten stürmischen Gärung, bei der das entstehende Kohlendioxid sprudelnd entweicht und dabei einen großen Teil der leicht flüchtigen Weinaromen mitreißt.

DE 34 34 170 A1 offenbart ein Verfahren zur Herstellung von Wein mittels alkoholischer Gärung, das darauf gerichtet ist, die Aromastoffe des Weins zu erhöhen, und zwar dadurch dass die Gärung bei Atmosphärendruck und Kühlung des Gärgebindes auf 2 bis 8 Grad öchsle pro Tag mit begrenzter Gärgeschwindigkeit durchgeführt und die Gärung durch anschließende Unterkühlung auf -3°C beendet wird. Der Wein wird in einem doppelwandig ausgebildeten Gärungsbehälter gemäß einem bestimmten Temperatur-Zeit-Programm ("Gärkurve") vergoren. Wenn die Gärgeschwindigkeit, die durch die austretende Menge CO₂ charakterisiert wird, zu hoch wird, wird eine Kühlung in Gang gesetzt, indem eine Kühlflüssigkeit durch die Doppelwandung umgepumpt wird.

Bei der Herstellung von alkoholhaltigen Getränken wird in eine in einem Flüssigkeitsbehälter bereitgestellte, zuckerhaltige Flüssigkeit, wie etwa Traubensaft oder Fruchtsaft, der Fruchtzucker enthält, eine Hefe bzw. Hefepilzkultur eingemischt und dadurch die Vergärung des Trauben- oder Fruchtsafts zu Traubenwein (Wein) oder Fruchtwein initiiert. Bei der Vergärung wird der Fruchtzucker in einer exothermen Reaktion, bei der Wärme entsteht, teilweise in Alkohol, überwiegend in Äthanol, umgesetzt. Je nach dem Fassungsvermögen des Flüssigkeitsbehälters und dem Material, aus dem er hergestellt ist, kann es erforderlich sein, die entstehende Wärme durch eine zusätzliche externe Kühlung, bei der eine strömende Kühlflüssigkeit, wie z.B. Wasser, mit einer Wand des Behälters in Kontakt gebracht wird, abzuführen. Dies gilt häufig insbesondere für Flüssigkeitsbehälter, die aus Kunststoff hergestellt sind, damit der Kunststoff nicht durch die Wärmeeinwirkung weich wird.

Die zuckerhaltige Flüssigkeit, wie etwa der Trauben- oder Fruchtsaft, kann auch eine Säure, wie etwa Fruchtsäure enthalten. Daher muss das Material, aus dem der Flüssigkeitsbehälter hergestellt ist, so ausgewählt oder bearbeitet sein, dass seine mit der Flüssigkeit in Kontakt kommende Oberfläche säurebeständig ist. In dieser Hinsicht ist es z.B. bei der Weinherstellung in Fässern aus Beton, wie sie zunehmend etwa in Frankreich verwendet werden, nachteilig, dass Beton Kalk enthält, der sich durch die Einwirkung der Fruchtsäure teilweise löst, zu einem Teil in die Flüssigkeit übergeht und sich zu einem anderen Teil auf der Innenwandoberfläche des Betonfasses niederschlägt. Daher werden Betonfässer vor dem Befüllen mit Traubensaft mit Zitronensäure gereinigt, um die ausgefallenen Kalkrückstände zu entfernen.

Bei in der Weinherstellung und -lagerung traditionell verwendeten Fässern aus Holz ist zum einen nachteilig, dass die Fässer nach ca. fünf bis sieben Weinherstellungszyklen entweder ersetzt werden müssen, weil die Innenoberfläche aus Holz angegriffen worden ist, oder getoastet (einer Wärmebehandlung unterzogen) werden müssen, um die Oberfläche wieder prozesstauglich zu machen bzw. zu regenerieren. Zum anderen ist die Konservierung von nicht mit Wein gefüllten Holzfässern problematisch und erfordert zusätzliche Maßnahmen, wie etwa das Anreichern der in einem Fass enthaltenen Luft mit Schwefel (sogenanntes Trockenkonservieren) oder das Einfüllen von Schwefelwasser in das Fass (sogenanntes Nasskonservieren).

Kenner bzw. Winzer wissen, dass es bei der Weinherstellung in Fässern aus Edelstahl schwierig ist, "große" Weine zu produzieren, weil Edelstahl unter den bisher üblichen Materialien (Holz, Edelstahl, Kunststoff, Beton) zum Herstellen der Fässer am neutralsten ist und aufgrund der relativ glatten Innenoberfläche nur relativ wenig Gasaustausch mit der eingefüllten Flüssigkeit (Traubensaft) stattfinden kann.

Angesichts der zuvor erwähnten Nachteile der bekannten Materialien zum Herstellen von Flüssigkeitsbehältern, wie etwa Fässern, für die Herstellung und/oder Lagerung von zum Trinkkonsum vorgesehenen Flüssigkeiten (Getränken), insbesondere von Wein, richtet sich die vorliegende Erfindung darauf, die bekannten Nachteile zu vermeiden oder zumindest zu verringern.

Insbesondere ist es eine Aufgabe der vorliegenden Erfindung, einen Flüssigkeitsbehälter zum Herstellen und/oder Lagern von zum Trinkkonsum vorgesehenen, insbesondere alkoholhaltigen, Flüssigkeiten bereitzustellen, der weitgehend unbegrenzt wieder verwendbar und leicht konservierbar ist und dabei an seiner Innenwandung eine raue Oberflächenstruktur aufweist, die einen intensiven Gasaustausch mit der herzustellenden Flüssigkeit und eine vollständigere chemische Umsetzung bei nur begrenzter Zufuhr von die Umsetzung initiierenden bzw. fördernden Zusatzstoffen ermöglicht.

### Offenbarung der Erfindung

Gemäß einem ersten Aspekt der Erfindung wird ein Flüssigkeitsbehälter zur Herstellung und/oder Lagerung von zum Trinkkonsum vorgesehenen, insbesondere alkoholhaltigen, Flüssigkeiten bereitgestellt. Der Flüssigkeitsbehälter umfasst einen an einer, insbesondere oberen, Seite offenen Behälter mit einer Behälterwandung mit einer Innenwandoberfläche. Dabei ist die Innenwandoberfläche zumindest teilweise, insbesondere im Wesentlichen vollständig, als eine Oberfläche eines massiven Natursteins ausgebildet. Erfindungsgemäß ist ein aus Naturstein hergestellter Teil der Innenwandoberfläche zunächst mittels Spalten oder Bohren oder Sägen des Natursteins hergestellt oder der Naturstein mit einem Sandstrahl behandelt worden und hat infolgedessen eine erste Rauigkeit aufgewiesen, und ist anschließend einer Oberflächenbehandlung unterzogen worden, die bewirkt hat, dass die Rauigkeit der behandelten Innenwandoberfläche in Bezug zu der zunächst mittels Spalten oder Sägen oder Bohren oder der Behandlung mit dem Sandstrahl hergestellten ersten Rauigkeit vergrößert worden ist. Insbesondere bei der Herstellung (Vergärung) von Wein wurde festgestellt, dass eine Natursteinoberfläche eine natürliche Rauheit mit einem Rauhigkeitsgrad aufweist, die/der einen intensiven Gasaustausch mit der herzustellenden Flüssigkeit und eine vollständige chemische Umsetzung bei begrenzter Zufuhr von die Umsetzung fördernden Zusatzstoffen ermöglicht, und bei der Weinherstellung die Entwicklung besonders fruchtiger Weine ermöglicht. Gleichzeitig ist eine Natursteinoberfläche widerstandfähig gegenüber einer Vielzahl von chemischen Stoffen, einschließlich Fruchtsäuren, so dass ein erfindungsgemäß ausgestalteter Flüssigkeitsbehälter im Wesentlichen unbegrenzt wieder verwendbar ist.

Gemäß einem zweiten Aspekt der Erfindung wird ein Verfahren zur Herstellung eines Flüssigkeitsbehälters zur Herstellung und/oder Lagerung von zum Trinkkonsum vorgesehenen, insbesondere alkoholhaltigen, Flüssigkeiten bereitgestellt. Dabei wird eine Innenwandoberfläche des Flüssigkeitsbehälters zumindest teilweise, insbesondere im Wesentlichen vollständig, als Oberfläche eines massiven Natursteins ausgebildet. Das Verfahren umfasst die folgenden Schritte:
(a) Bereitstellen eines Blocks aus einem massiven Naturstein, und
(b) mittels eines ersten Hohlbohrkernbohrers mit einem ersten Außendurchmesser, in dem Block Ausbohren einer im Wesentlichen zylinderförmigen ersten Innenwandoberfläche mit einem ersten Innendurchmesser, der nominal dem ersten Außendurchmesser des Hohlbohrkernbohrers entspricht, wobei die erste Innenwandoberfläche als Innenwandoberfläche eines ersten Mantelabschnitts eines ersten Flüssigkeitsbehälters vorgesehen ist, und erfindungsgemäß ferner
(c) Ausführen einer Oberflächenbearbeitung auf der als Innenwandoberfläche vorgesehenen Oberfläche des Natursteins, wobei durch die Oberflächenbearbeitung die Rauhigkeit und/oder die spezifische Oberfläche der Innenwandoberfläche vergrößert wird.

Ein Vorteil des Verfahrens gemäß dem zweiten Aspekt ist, dass mit im Wesentlichen nur einem Arbeitsschritt, nämlich dem des Ausbohrens mittels eines Hohlkernbohrers, ein verwendbarer Mantelabschnitt für einen erfindungsgemäßen Flüssigkeitsbehälter hergestellt wird. Ein weiterer Vorteil dieses Verfahrens ist, dass im Schritt (b) ferner ein im Wesentlichen zylinderförmiger Bohrkern aus massivem Naturstein erzeugt wird, aus dem in Material sparender Weise in einem weiteren Arbeitsschritt des Ausbohrens mittels eines zweiten Hohlbohrkernbohrers mit einem zweiten Außendurchmesser, der kleiner als der erste Außendurchmesser des ersten Hohlbohrkernbohrers ist, ein weiterer, in diesem Fall zylinderwandförmiger Mantelabschnitt für einen zweiten erfindungsgemäßen Flüssigkeitsbehälter hergestellt werden kann.

In dem Verfahren gemäß einem zweiten Aspekt wird im Schritt (b) ein im Wesentlichen zylinderförmiger Bohrkern aus massivem Naturstein mit einem ersten Außendurchmesser erzeugt, wobei der erste Außendurchmesser nominal einem Innendurchmesser des ersten Hohlbohrkernbohrers entspricht. Das Verfahren gemäß dem zweiten Aspekt kann ferner den folgenden Schritt umfassen:
(d) in den im Schritt (b) erhaltenen, im Wesentlichen zylinderförmigen Bohrkern aus massivem Naturstein, mittels eines zweiten Hohlbohrkernbohrers mit einem zweiten Außendurchmesser, der um einen vorbestimmten Wert kleiner als der erste Außendurchmesser ist, und koaxial zu der im Schritt (b) durchgeführten Ausbohrung, Ausbohren einer im Wesentlichen zylinderförmigen zweiten Innenwandoberfläche mit einem zweiten Innendurchmesser, so dass ein als Mantelabschnitt eines zweiten Flüssigkeitsbehälters verwendbarer Zylindermantel aus massivem Naturstein entsteht, dessen zweite Innenwandoberfläche direkt oder gegebenenfalls nach Ausführen eines Oberflächenbearbeitungsschritts als Innenwandoberfläche des Mantelabschnitts des zweiten Flüssigkeitsbehälters vorgesehen ist. So kann in Material und Aufwand sparender Weise ein weiterer, hier zylinderwandförmiger Mantelabschnitt für einen zweiten erfindungsgemäßen Flüssigkeitsbehälter hergestellt werden.

Gemäß einem dritten Aspekt der Erfindung wird ein Verfahren zur Herstellung eines Flüssigkeitsbehälters zur Herstellung und/oder Lagerung von zum Trinkkonsum vorgesehenen, insbesondere alkoholhaltigen, Flüssigkeiten bereitgestellt. Dabei wird eine Innenwandoberfläche des Flüssigkeitsbehälters zumindest teilweise, insbesondere im Wesentlichen vollständig, als Oberfläche eines massiven Natursteins ausgebildet. Das Verfahren umfasst die folgenden Schritte:
(A) Bereitstellen eines Blocks aus einem massiven Naturstein, der zumindest in einem Teilbereich im Wesentlichen plattenförmig ausgebildet ist und zwei im Wesentlichen parallel zueinander angeordnete Plattenoberflächen aufweist,
(B) aus dem plattenförmigen Teilbereich, Austrennen von mindestens zwei Längsabschnitten, die jeweils zwei Längsseitenflächen aufweisen, wobei die Längsseitenfläche in Bezug auf eine der Plattenoberflächen entweder einen rechten Winkel bilden oder, um zu ermöglichen, dass die mindestens zwei Längsabschnitte auf Gehrung aneinander angrenzend angeordnet werden können, einen spitzen Winkel bilden und in Bezug auf die eine der Plattenoberflächen zueinander geneigt sind, und
(C) Anordnen von drei oder mehr Längsabschnitten, die aus den Schritten (A) und (B) erhalten worden sind, zu einem Hohlkörper, so dass innenseitig des Hohlkörpers angeordnete Plattenoberflächen der Längsabschnitte als Innenwandoberfläche eines Mantelabschnitts des Flüssigkeitsbehälters vorgesehen sind, und erfindungsgemäß ferner
(D) Ausführen einer Oberflächenbearbeitung auf der als Innenwandoberfläche vorgesehenen Oberfläche des Natursteins, wobei durch die Oberflächenbearbeitung die Rauhigkeit und/oder die spezifische Oberfläche der Innenwandoberfläche vergrößert wird.

Ein Vorteil des Verfahrens gemäß dem dritten Aspekt der Erfindung ist, dass es von einem plattenförmigen Block aus Naturstein ausgeht, der im Wesentlichen nur die gewünschte Dicke der Längsabschnitte des Mantelabschnitts des Flüssigkeitsbehälters aufweisen muss, während als Ausgangsobjekt für das Verfahrens gemäß dem zweiten Aspekt der Erfindung ein Block aus Naturstein erforderlich ist, der mindestens eine Dicke aufweisen muss, die in etwa dem Durchmesser des Mantelabschnitts des Flüssigkeitsbehälters entspricht. Derartige plattenförmige Blöcke aus Naturstein sind in der Natur häufiger zu finden bzw. lassen sich leichter vom Steinbruch zur Bearbeitungsstätte transportieren.

Gemäß einem vierten Aspekt der Erfindung wird ein Verfahren zur Herstellung eines Behälters oder eines Mantelabschnitts für einen Behälter eines Flüssigkeitsbehälters zur Herstellung und/oder Lagerung von zum Trinkkonsum vorgesehenen, insbesondere alkoholhaltigen, Flüssigkeiten, bereitgestellt. Dabei wird eine Innenwandoberfläche des Mantelabschnitts oder des Behälters zumindest teilweise, insbesondere im Wesentlichen vollständig, als Oberfläche eines massiven Natursteins ausgebildet. Das Verfahren umfasst die folgenden Schritte:
(1) Bereitstellen eines Blocks mit einer im Wesentlichen zylinderförmigen Mantelinnenwandoberfläche oder mit einer Bodeninnenoberfläche und einer im Wesentlichen zylinderförmigen Mantelinnenwandoberfläche, als Trageschicht des Mantelabschnitts oder des Behälters, und
(2) im Wesentlichen flächendeckend Auskleiden der Mantelinnenwandoberfläche oder der Bodeninnenoberfläche und der Mantelinnenwandoberfläche mit plattenförmigen Deckschichtsegmenten, wie etwa Fliesen, die aus einem massiven Naturstein hergestellt worden sind, zum Herstellen des Mantelabschnitts oder des Behälters, und erfindungsgemäß ferner
(3) Ausführen einer Oberflächenbearbeitung auf der als Innenwandoberfläche vorgesehenen Oberfläche des Natursteins, wobei durch die Oberflächenbearbeitung die Rauhigkeit und/oder die spezifische Oberfläche der Innenwandoberfläche vergrößert wird.

Gemäß einem fünften Aspekt der Erfindung wird ein Verfahren zur Herstellung und/oder Lagerung einer zum Trinkkonsum vorgesehenen Flüssigkeit oder eines Vorprodukts für eine derartige Flüssigkeit bereitgestellt. Das Verfahren umfasst die folgenden Schritte:
(i) Bereitstellen eines Flüssigkeitsbehälter gemäß dem ersten Aspekt der Erfindung,
(ii) Abkühlen von zumindest einem Teilbereich des Flüssigkeitsbehälters einschließlich des Mantelabschnitts und des Bodenabschnitts, in Bezug auf die Temperatur der umgebenden Luftatmosphäre,
(iii) Einfüllen einer Flüssigkeit in den gemäß Schritt (ii) abgekühlten Flüssigkeitsbehälter, und
(iv) Initiieren eines Schritts einer chemischen und/oder biochemischen Umwandlung der eingefüllten Flüssigkeit, wie etwa eine Fermentation oder eine Vergärung, zum Erzeugen der Flüssigkeit oder eines Vorprodukts, wobei während der Umwandlung keine weiteren Maßnahmen bzw. Prozesse zur Kühlung des Flüssigkeitsbehälters und/oder der sich in dem Flüssigkeitsbehälter befindenden Flüssigkeit ergriffen bzw. durchgeführt werden.

Das Verfahrens gemäß dem fünften Aspekt der Erfindung nutzt die relativ hohe Wärmekapazität (bzw. Kühlkapazität) des Materials Naturstein aus, was den Vorteil bewirkt, dass auf zusätzliche Maßnahmen für eine weitergehende Kühlung, wie etwa eine externe Kühlung mit Kühlwasser, verzichtet werden kann.

Gemäß einem sechsten Aspekt der Erfindung wird ein Flüssigkeitsbehälter gemäß dem ersten Aspekt der Erfindung zum Herstellen und/oder Lagern einer zum Trinkkonsum vorgesehenen Flüssigkeit verwendet. Die Flüssigkeit kann insbesondere eine alkoholhaltige Flüssigkeit, wie etwa Wein, Fruchtwein oder andere aus dem Saft von Weintrauben oder Früchten herstellbare Getränke, Schnaps, Whisky, Bier oder ein Mischgetränk sein.

Die Verwendung gemäß dem sechsten Aspekt der Erfindung nutzt einerseits die vorteilhafte Oberflächenbeschaffenheit (Rauheit) des Materials Naturstein als Material der Innenwandoberfläche aus, die förderlich für die chemische Umsetzung und einen regen Gasaustausch mit der herzustellenden Flüssigkeit ist, und andererseits die relativ hohe Wärmekapazität (Kühlkapazität) von Naturstein, was ermöglicht, dass auf zusätzliche Maßnahmen für eine weitergehende Kühlung, wie etwa eine externe Kühlung mit Kühlwasser, verzichtet werden kann.

Der Flüssigkeitsbehälter gemäß dem ersten Aspekt der Erfindung kann einen Deckel zum Abdecken der offenen Seite des Behälters umfassen. Dabei kann der Deckel eine als Deckelabschnitt der Innenwandoberfläche des Flüssigkeitsbehälters vorgesehene Deckeloberfläche haben, die im Wesentlichen vollständig als eine Oberfläche eines massiven Natursteins ausgebildet ist. Das Vorsehen eines Deckels verhindert das ungewollte Eindringen bzw. Hineinfallen von Fremdkörpern in die herzustellende Flüssigkeit. Wenn die Innenwandoberfläche des Deckels ebenfalls aus Naturstein ausgebildet ist, kann der Flüssigkeitsbehälter bis an seinen oberen Rand gefüllt und damit seine Füllkapazität voll ausgenutzt werden, wobei die Flüssigkeitsoberfläche auch an der Innenwandoberfläche des Deckels mit dem Material Naturstein in Kontakt kommen kann.
Die Behälterwandung des Behälters kann einen Bodenabschnitt und einen Mantelabschnitt umfassen. Dabei kann der Mantelabschnitt in einer Umfangsrichtung und/oder in einer zu der offenen Seite des Behälters weisenden, z.B. axialen, Richtung in mindestens zwei aneinandergrenzende Mantelsegmente unterteilt sein. Dabei kann der Mantelabschnitt in einer zu seiner offenen Seite weisenden Richtung in mindestens zwei Mantelsegmente unterteilt sein. Alternativ oder zusätzlich dazu kann der Mantelabschnitt in einer Umfangsrichtung in mindestens zwei, vorzugsweise vier, sechs oder acht, Mantelsegmente unterteilt sein. Das Unterteilen des Mantelabschnitts in Mantelsegmente ermöglicht, dass Behälter mit großen Fassungsvermögen leicht aus mehreren Segmenten hergestellt werden können, ohne dass ein Natursteinblock mit einer Größe erforderlich ist, die ausreicht, um daraus einen einteiligen Behälter bzw. einen Mantelabschnitt eines Behälters herzustellen.
In einer Ausführungsform kann die Behälterwandung eine Trageschicht und eine an einer Innenseite der Trageschicht angeordnete Deckschicht umfassen. Dabei kann die Deckschicht mit der Trageschicht, insbesondere flächig, verbunden sein. Dabei kann die Deckschicht zumindest teilweise, vorzugsweise im Wesentlichen vollständig, z.B. als ein Monoblock, als eine Oberfläche eines massiven Natursteins ausgebildet sein. Wenn sie nicht als ein Monoblock aus einem massiven Naturstein ausgebildet ist, kann die Deckschicht der Behälterwandung in einer Umfangsrichtung und/oder in einer zu der offenen Seite des Behälters weisenden, z.B. axialen, Richtung in mindestens zwei aneinandergrenzende Deckschichtsegmente unterteilt sein. Diese Ausführungsform ist Material sparend, weil nur die Deckschicht aus Naturstein hergestellt ist, während die Tragschicht aus einem anderen Material hergestellt sein kann. Die Trageschicht kann aus Beton oder einem gießbaren und/oder formbaren, aushärtbaren Kunststein ausgebildet sein. Eine derartige Wahl des Materials der Tragschicht führt zu einer relativ hohen Wärmekapazität (Kühlkapazität) auch in der Tragschicht, die vergleichbar ist zu der Wärmekapazität von Naturstein, ohne dass (relativ teurer) Naturstein erforderlich ist.

Der Flüssigkeitsbehälter kann einen Deckel zum Abdecken der offenen Seite des Behälters umfassen, wobei der Deckel eine Deckeltrageschicht und eine an einer Innenseite der Deckeltrageschicht angeordnete Deckeldeckschicht umfasst. Dabei kann die Deckeldeckschicht mit der Deckeltrageschicht, insbesondere flächig, verbunden sein. Dabei kann die Deckeldeckschicht im Wesentlichen vollständig, insbesondere als ein Monoblock, aus einem massiven Naturstein hergestellt sein. Diese Ausführungsform ist Material sparend, weil nur die Deckeldeckschicht aus Naturstein hergestellt ist, während die Deckeltragschicht aus einem anderen Material hergestellt sein kann. Die Deckeltrageschicht kann aus Beton oder einem gießbaren und/oder formbaren, aushärtbaren Kunststein ausgebildet sein. Wie auch bei der Behälterwandung führt diese Materialwahl zu einer relativ hohen Wärmekapazität (Kühlkapazität) auch in der Deckeltragschicht, die vergleichbar ist zu der Wärmekapazität von Naturstein, ohne dass (relativ teurer) Naturstein erforderlich ist

Die Behälterwandung des Behälters kann einen Bodenabschnitt und einen Mantelabschnitt umfassen. Dabei kann der Mantelabschnitt im Wesentlichen vollständig, insbesondere als ein Monoblock, aus massivem Naturstein hergestellt sein. Dabei kann der Mantelabschnitt im Wesentlichen zylinderförmig sein. Der Bodenabschnitt kann im Wesentlichen plattenförmig und im Wesentlichen vollständig, insbesondere als ein Monoblock, aus massivem Naturstein hergestellt sein. So kann die gesamte Behälterwandung aus massivem Naturstein hergestellt sein. Eine derartige Ausgestaltung vermittelt einen natürlichen, wertvollen Eindruck, insbesondere bei Flüssigkeitsbehältern, die der Öffentlichkeit gezeigt werden. Ferner bewirkt diese Ausgestaltung eine relativ hohe Wärmekapazität (Kühlkapazität) des gesamten Behälters.

Alternativ oder zusätzlich dazu kann die Behälterwandung des Behälters im Wesentlichen vollständig, insbesondere als ein Monoblock, aus einem massiven Naturstein hergestellt sein. Diese Ausgestaltung vermittelt einen besonders wertvollen, urtümlichen Eindruck, insbesondere bei Flüssigkeitsbehältern, die der Öffentlichkeit gezeigt werden.

Der Flüssigkeitsbehälter kann einen Deckel umfassen, der im Wesentlichen vollständig, insbesondere als ein Monoblock, aus einem massiven Naturstein hergestellt ist. Auch diese Ausgestaltung vermittelt einen natürlichen, wertvollen Eindruck des Flüssigkeitsbehälters, insbesondere wenn dieser der Öffentlichkeit zur Schau gestellt wird. Ferner wird eine relativ hohe Wärmekapazität (Kühlkapazität) des Deckels erzielt.

Der Flüssigkeitsbehälter kann einen im Wesentlichen zylinderförmigen Mantelabschnittumfassen, der im Wesentlichen vollständig aus massivem Naturstein hergestellt ist. Dieser Flüssigkeitsbehälter kann ferner einen im Wesentlichen plattenförmigen Bodenabschnitt umfassen, der im Wesentlichen vollständig aus massivem Naturstein hergestellt ist. Vorzugsweise kann dieser Flüssigkeitsbehälter ferner einen im Wesentlichen plattenförmigen Deckel umfasst, der ebenfalls im Wesentlichen vollständig aus massivem Naturstein hergestellt ist. Diese Ausgestaltung vermittelt einen besonders wertvollen, urtümlichen Eindruck des Flüssigkeitsbehälters, insbesondere wenn dieser der Öffentlichkeit zur Schau gestellt wird. Ferner wird eine relativ hohe Wärmekapazität (Kühlkapazität) des gesamten Flüssigkeitsbehälters erzielt.

Der Flüssigkeitsbehälter kann einen Bodenabschnitt und einen Mantelabschnitt umfassen. Dabei kann im Mantelabschnitt in einem vorbestimmten Abstand zu einem, insbesondere bodenseitigen, Ende des Mantelabschnitts ein verschließbarer und öffenbarer erster Flüssigkeitsauslass vorgesehen sein. Der erste Flüssigkeitsauslass, bei Weinfässern auch Klarauslass genannt, ermöglicht, fertig hergestellte Flüssigkeit zu entnehmen, wobei ein etwaiger Bodensatz, der eine Trübung der entnommenen Flüssigkeit bewirken würde, in dem Flüssigkeitsbehälter verbleibt. Ferner kann vorgesehen sein, dass der Bodenabschnitt einen verschließbaren und öffenbaren zweiter Flüssigkeitsauslass umfasst. Der zweite Flüssigkeitsauslass kann in der Nähe einer oder an einer im Betrieb des Flüssigkeitsbehälters tiefsten Stelle des Bodenabschnitts vorgesehen sein. Der zweite Flüssigkeitsauslass dient zum Ablassen eines etwaigen Bodensatzes der in dem Behälter hergestellten Flüssigkeit und nach einer Reinigung zum vollständigen Ablassen einer Reinigungsflüssigkeit (eines Reinigungsmittels).

In dem Flüssigkeitsbehälter ist die Innenwandoberfläche rauer als eine durch eine Bearbeitung mit einem Sandstrahl behandelte Oberfläche. Insbesondere kann die Innenwandoberfläche eine durch Ausführen eines Oberflächenbearbeitungsschritts gestockte, scharrierte, gespitzte oder geflammte Oberfläche, umfassen. Es zeigt sich, dass es vorteilhaft ist, die Innenwandoberfläche aus Naturstein gerade nicht zu glätten, zu schleifen oder zu polieren, sondern in ihrer natürlichen Rauhigkeit, wie sie beim Spalten entsteht, oder der Rauhigkeit, wie sie beim Bohren oder Sägen entsteht, zu belassen, und im Gegenteil, die entstandene Innenwandoberfläche in dem Oberflächenbearbeitungsschritt zusätzlich rauer zu gestalten.
Ein Fachmann, hier ein Steinmetz, weiß, dass beim sogenannten Stocken mit einem hammerartigen Werkzeug auf die Natursteinoberfläche geschlagen wird, so dass einzelne Steinplättchen bzw. Steinsplitter abspringen und eine rauere Oberfläche mit Unebenheiten in der Größenordnung (Abmessung) von einem oder mehreren Zentimetern entstehen. Beim sogenannten Scharrieren wird mit einem speziellen, mit einem Werkzeugkopf versehenen Werkzeug auf die Natursteinoberfläche geschlagen, wobei der Werkzeugkopf an seiner Schlagseite mehrere Vorsprünge aufweist, die das Absplittern von Steinplättchen bzw. Steinsplittern bewirkt. Beim sogenannten Spitzen wird mit einem speziellen, mit einer Schlagspitze versehenen Werkzeug auf die Natursteinoberfläche geschlagen, um das Absplittern von Steinplättchen bzw. Steinsplittern zu bewirken. Beim sogenannten Flammen wird die Oberfläche mit einer heißen Feuerflamme, etwa aus einem Thermobrenner bzw. oder einem Schneidbrenner, behandelt, so dass aufgrund der entstehenden thermomechanischen Spannung Steinpartikel, Steinplättchen bzw. Steinsplitter von der Oberfläche absplittern. Das Vergrößern der Rauhigkeit kann eine Intensivierung des Gasaustauschs mit der Flüssigkeit bewirken und eine chemische Umsetzung fördern.
Ein Bodenabschnitt kann aus einem massiven Naturstein hergestellt sein und eine Dicke von mehr als 10 cm, bevorzugt mehr als 12 cm und noch mehr bevorzugt mehr als 15 cm aufweisen. Eine derartige Wahl der Dicke der Bodenplatte ist vorteilhaft zum Erzielen einer großen Wärmekapazität (Kühlkapazität) aufgrund der Bodenplatte.
Ein Mantelabschnitt kann aus einem massiven Naturstein hergestellt sein und eine Dicke von mehr als 8 cm, bevorzugt mehr als 10 cm, mehr bevorzugt mehr als 12 cm und noch mehr bevorzugt mehr als 15 cm aufweisen. Eine derartige Wahl der Dicke des Mantelabschnitts ist vorteilhaft zum Erzielen einer großen Wärmekapazität (Kühlkapazität) aufgrund des Mantelabschnitts.
Der Naturstein kann Granit einschließlich etwa Paragneis, Orthogneis oder Syenit, oder Basalt sein. Der Naturstein ist jedenfalls kein kalkreicher Naturstein, wie etwa Marmor. Diese Materialwahl bewirkt, dass der Naturstein besonders widerstandsfähig gegenüber Säure (auch Fruchtsäure) enthaltenden Flüssigkeiten ist.

Das Verfahren gemäß dem zweiten Aspekt der Erfindung kann ferner den folgenden Schritt umfassen:
(c) Bereitstellen eines Bodenabschnitts aus massivem Naturstein mit einer im Wesentlichen ebenen Oberfläche, die direkt oder gegebenenfalls nach Ausführen eines Oberflächenbearbeitungsschritts als Bodenabschnitt der Innenwandoberfläche des ersten Flüssigkeitsbehälters vorgesehen ist.
Vorzugsweise wird auch ein Deckelabschnitt aus massivem Naturstein mit einer im Wesentlichen ebenen Oberfläche, die direkt oder gegebenenfalls nach Ausführen eines Oberflächenbearbeitungsschritts als Deckelabschnitt der Innenwandoberfläche des Flüssigkeitsbehälters vorgesehen ist, bereitgestellt. Auf diese Weise erhält man einen Flüssigkeitsbehälter, der im Wesentlichen vollständig aus Naturstein hergestellt ist, was einen wertvollen Eindruck vermittelt und vorteilhaft im Hinblick auf die Wärmekapazität (Kühlkapazität) der Behälterwandung des Flüssigkeitsbehälters ist.

Das Verfahren gemäß dem zweiten Aspekt der Erfindung kann noch ferner den folgenden Schritt umfassen:
(e) in den im Schritt (d) erhaltenen, im Wesentlichen zylinderförmigen Bohrkern aus massivem Naturstein, mittels eines dritten Hohlbohrkernbohrers mit einem dritten Außendurchmesser, der um einen vorbestimmten Wert kleiner als der zweite Außendurchmesser ist, und koaxial zu den in den Schritten b) und d) durchgeführten Ausbohrungen, Ausbohren einer im Wesentlichen zylinderförmigen dritten Innenwandoberfläche mit einem dritten Innendurchmesser, so dass ein als Mantelabschnitt eines dritten Flüssigkeitsbehälters verwendbarer Zylindermantel aus massivem Naturstein entsteht, dessen dritte Innenwandoberfläche direkt oder gegebenenfalls nach Ausführen eines Oberflächenbearbeitungsschritts als Innenwandoberfläche des Mantelabschnitts des dritten Flüssigkeitsbehälters vorgesehen ist. So kann in Material und Aufwand sparender Weise ein noch weiterer, hier zylinderwandförmiger Mantelabschnitt für einen dritten erfindungsgemäßen Flüssigkeitsbehälter hergestellt werden.

Das Verfahren gemäß dem dritten Aspekt der Erfindung kann ferner den folgenden Schritt umfassen:
(D) Umgießen oder Umspritzen des im Schritt (C) erhaltenen Hohlkörpers mit Beton oder mit einem gießbaren und/oder formbaren, aushärtbaren Kunststein, und Aushärtenlassen des Betons oder Kunststeins, so dass eine äußere Mantelfläche des im Schritt (C) erhaltenen Hohlkörpers im Wesentlichen vollständig mit ausgehärtetem Beton oder mit ausgehärtetem Kunststein bedeckt ist, um den Mantelabschnitt herzustellen. Durch das Umgießen oder Umspritzen des im Schritt (C) erhaltenen, d.h. aus Längsabschnitten erhaltenen Hohlkörpers mit Beton oder mit einem aushärtbaren Kunststein wird eine Tragschicht hergestellt, die die Längsabschnitte abstützt bzw. trägt und den gesamten Behälter verfestigt bzw. stabilisiert.

Das Verfahren gemäß dem dritten Aspekt der Erfindung kann noch ferner den folgenden Schritt umfassen:
(E) Bereitstellen eines als Bodenplatte ausgebildeten Bodenabschnitts, von dem zumindest eine als Innenwandoberfläche vorgesehene Seite im Wesentlichen vollständig als Oberfläche eines massiven Natursteins ausgebildet ist, und
(F) flüssigkeitsdicht Verbinden des Bodenabschnitts mit einem Endbereich des im Schritt (C) oder im Schritt (D) erhaltenen Hohlkörpers, so dass ein an dem anderen Endbereich des Hohlkörpers offener Behälter entsteht.
So wird ein im Wesentlichen vollständig aus massivem Naturstein bestehender Behälter hergestellt, was einen wertvollen, urtümlichen Eindruck vermittelt und vorteilhaft im Hinblick auf das Erzielen einer hohen Wärmekapazität (Kühlkapazität) der Behälterwandung ist.

Das Verfahren gemäß dem dritten Aspekt der Erfindung kann noch ferner den folgenden Schritt umfassen:
(G) Bereitstellen eines Deckels, von dem zumindest eine als Innenwandoberfläche vorgesehene Seite im Wesentlichen vollständig als Oberfläche eines massiven Natursteins ausgebildet ist, und
(H) lösbar und flüssigkeitsdicht Verbinden des Deckels mit dem offenen Endbereich des im Schritt (C) oder im Schritt (D) erhaltenen Hohlkörpers, so dass ein an dem anderen Endbereich des Hohlkörpers mittels des Deckels verschlossener, öffenbarer und wieder verschließbarer Flüssigkeitsbehälter entsteht.
So wird ein im Wesentlichen vollständig aus massivem Naturstein bestehender Behälter mit Deckel hergestellt, mit den gleichen bzw. verstärkten Vorteilen des aus den Schritten (E) und (F) resultierenden Behälters.

In dem Verfahren gemäß dem zweiten oder dritten Aspekt der Erfindung kann die als Innenwandoberfläche vorgesehene Oberfläche des Natursteins einer Oberflächenbearbeitung unterzogen werden, die die Rauhigkeit der Oberfläche und/oder die spezifische Oberfläche der Oberfläche vergrößert. Die Oberflächenbearbeitung kann insbesondere ein Stocken, Scharrieren oder Spitzen umfassen. Wie bereits erwähnt, sind Stocken, Scharrieren oder Spitzen dem Fachmann, hier einem Steinmetz, bekannte Oberflächenbearbeitungstechniken, die dazu dienen, die Rauhigkeit der Oberfläche zu vergrößern. Das Vergrößern der Rauhigkeit kann eine Intensivierung des Gasaustauschs mit der Flüssigkeit bewirken und eine chemische Umsetzung fördern.

In dem Verfahren gemäß dem vierten Aspekt kann der Block aus Beton oder einem ausgehärteten Kunststein hergestellt worden sein. Ferner kann mittels des Verfahrens ein Mantelabschnitt für einen Behälter hergestellt werden, wobei der Block im Wesentlichen rohrförmig bereitgestellt wird. Als ein derartiger rohrförmiger Block kann z.B. ein Rohrabschnitt für eine Abwasserleitung bereitgestellt werden.

In dem Verfahren gemäß dem fünften Aspekt der Erfindung kann im Schritt (ii) der Deckel mit abgekühlt werden. Auch kann im Schritt (ii) der Teilbereich des Flüssigkeitsbehälters in den Temperaturbereich von 6°C bis 12°C, noch mehr bevorzugt in den Temperaturbereich von 8°C bis 10°C abgekühlt werden. Die genannten Temperaturen sind in Räumlichkeiten anzutreffen, die vor Sonnenlicht und Wärmeeinstrahlung abgeschottet sind und ggf. teilweise unter der Erdoberfläche liegen, wie etwa in Weinkellern, so dass das Abkühlen von zumindest dem Teilbereich des Flüssigkeitsbehälters in die genannten Temperaturbereiche von selbst im Rahmen des Temperaturausgleichs mit der Umgebung erzielt wird.

Das Verfahren gemäß dem fünften Aspekt der Erfindung kann ferner den folgenden Schritt umfassen:
(v) in dem Flüssigkeitsbehälter, mit einem im Schritt (iv) erhaltenen Vorprodukt, Initiieren, Durchführen und/oder Abwarten von weiteren Verarbeitungs- und oder Bearbeitungsschritten, wie etwa ein Reifungsprozess, zum Erzeugen der zum Trinkkonsum vorgesehenen Flüssigkeit.
Weitere Verarbeitungsschritte können das Beimischen weiterer Substanzen zum gezielten Einstellen von Eigenschaften der hergestellten bzw. herzustellenden Flüssigkeit, und/oder das Mischen mit anderen Flüssigkeiten zum Herstellen von Mischgetränken umfassen. So lassen sich mit dem erfindungsgemäßen Verfahren vielfältige Flüssigkeiten herstellen.

### Kurze Beschreibung der Figuren

Ausführungsformen der Erfindung werden im Folgenden beispielhaft anhand der beigefügten Figuren in weiteren Einzelheiten beschrieben. Es zeigen:
Fig. 1A eine schematische perspektivische Ansicht eines Behälters eines Flüssigkeitsbehälters gemäß einer ersten Ausführungsform,
Fig. 1B eine schematische Querschnittansicht des Flüssigkeitsbehälters aus der Fig. 1A geschnitten in der Ebene A-A der Fig. 1A, wobei der Flüssigkeitsbehälter zusätzlich mit einem Deckel versehen ist,
Fig. 2A eine schematische perspektivische Ansicht eines Behälters eines Flüssigkeitsbehälters gemäß einer zweiten Ausführungsform, wobei der Flüssigkeitsbehälter einen zylinderförmigen Mantelabschnitt, einen scheibenförmigen Bodenabschnitt und einen scheibenförmigen Deckelabschnitt gemäß einer ersten Variante umfasst,
Fig. 2B eine schematische Querschnittansicht des Flüssigkeitsbehälters aus der Fig. 2A geschnitten in der Ebene B-B der Fig. 2A, wobei der Mantelabschnitt mit einem ersten Flüssigkeitsauslass und der Bodenabschnitt mit einem zweiten Flüssigkeitsauslass versehen ist,
Fig. 2C eine schematische Querschnittansicht eines Deckelabschnitts gemäß einer zweiten Variante, des Flüssigkeitsbehälters aus der Fig. 2A, geschnitten in der Ebene B-B der Fig. 2A,
Fig. 3 eine schematische Aufsicht auf einen Block aus einem massivem Naturstein, aus dem sukzessive mittels verschiedener Hohlbohrkernbohrer ein Mantelabschnitt und mehrere zylinderförmige Mantelabschnitte mit verschiedenen Innendurchmessern für mehrere verschiedene Flüssigkeitsbehälter ausgebohrt werden,
Fig. 4A eine schematische perspektivische Ansicht einer Platte aus einem massivem Naturstein, aus der sukzessive mehrere Längsabschnitte gemäß einer ersten Variante für einen Mantelabschnitt eines Flüssigkeitsbehälters ausgesägt werden,
Fig. 4B eine schematische Querschnittansicht eines Mantelabschnitts eines Flüssigkeitsbehälters, wobei in dem Mantelabschnitt mehrere Längsabschnitte aus Fig. 4A aufgenommen sind, geschnitten in einer Ebene senkrecht zu einer Längsachse des Mantelabschnitts,
Fig. 4C eine schematische perspektivische Ansicht des Mantelabschnitts aus der Fig. 4B,
Fig. 5A eine schematische perspektivische Ansicht einer Platte aus einem massivem Naturstein, aus der sukzessive mehrere Längsabschnitte gemäß einer zweiten Variante für einen Mantelabschnitt eines Flüssigkeitsbehälters ausgesägt werden,
Fig. 5B eine schematische Querschnittansicht eines Mantelabschnitts eines Flüssigkeitsbehälters, wobei in dem Mantelabschnitt mehrere Längsabschnitte aus Fig. 5A aufgenommen sind, geschnitten in einer Ebene senkrecht zu einer Längsachse des Mantelabschnitts,
Fig. 5C eine schematische perspektivische Ansicht des Mantelabschnitts aus der Fig. 5B,
Fig. 6A eine schematische Querschnittansicht eines Mantelabschnitts gemäß einer ersten Variante eines Flüssigkeitsbehälters bzw. einer Deckschicht gemäß einer ersten Variante eines Mantelabschnitts eines Flüssigkeitsbehälters, geschnitten in einer Ebene senkrecht zu einer Längsachse des Mantelabschnitts,
Fig. 6B eine schematische Querschnittansicht vergleichbar der Fig. 6A eines Mantelabschnitts gemäß einer zweiten Variante eines Flüssigkeitsbehälters bzw. einer Deckschicht gemäß einer zweiten Variante eines Mantelabschnitts eines Flüssigkeitsbehälters,
Fig. 6C eine schematische Querschnittansicht vergleichbar der Fig. 6A eines Mantelabschnitts gemäß einer dritten Variante eines Flüssigkeitsbehälters bzw. einer Deckschicht gemäß einer dritten Variante eines Mantelabschnitts eines Flüssigkeitsbehälters,
Fig. 6D eine schematische Querschnittansicht vergleichbar der Fig. 6A eines Mantelabschnitts gemäß einer vierten Variante eines Flüssigkeitsbehälters bzw. einer Deckschicht gemäß einer vierten Variante eines Mantelabschnitts eines Flüssigkeitsbehälters,
Fig. 7A eine schematische Querschnittansicht einer Deckschicht gemäß einer fünften Variante eines Mantelabschnitts eines Flüssigkeitsbehälters, geschnitten in einer Ebene senkrecht zu einer Längsachse des Mantelabschnitts,
Fig. 7B eine schematische Querschnittansicht vergleichbar der Fig. 7A einer Deckschicht gemäß einer sechsten Variante eines Mantelabschnitts eines Flüssigkeitsbehälters,
Fig. 7C eine schematische Querschnittansicht vergleichbar der Fig. 7A einer Deckschicht gemäß einer siebenten Variante eines Mantelabschnitts eines Flüssigkeitsbehälters,
Fig. 7D eine schematische Querschnittansicht vergleichbar der Fig. 7A einer Deckschicht gemäß einer achten Variante eines Mantelabschnitts eines Flüssigkeitsbehälters,
Fig. 8 eine schematische Querschnittansicht eines Mantelabschnitts gemäß einer weiteren Variante eines Flüssigkeitsbehälters, geschnitten in einer Ebene senkrecht zu einer Längsachse des Mantelabschnitts,
Fig. 9 eine schematische Querschnittansicht eines Mantelabschnitts gemäß einer noch weiteren Variante eines Flüssigkeitsbehälters, geschnitten in einer Ebene senkrecht zu einer Längsachse des Mantelabschnitts,
Fig. 10 eine schematische Querschnittansicht eines Mantelabschnitts gemäß einer noch weiteren Variante eines Flüssigkeitsbehälters, geschnitten in einer Ebene senkrecht zu einer Längsachse des Mantelabschnitts, und
Fig. 11 eine schematische perspektivische Ansicht eines Mantelabschnitt eines Behälters eines Flüssigkeitsbehälters, wobei der Mantelabschnitt in mehrere, in einer axialen Richtung aneinandergrenzende Mantelsegmente unterteilt ist.

### Ausführungsformen der Erfindung

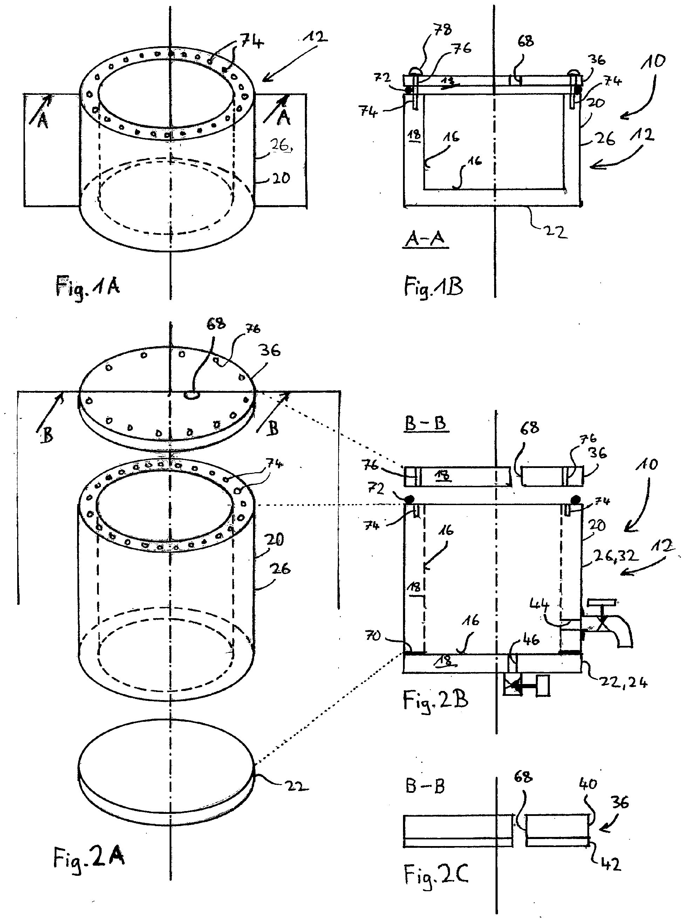

Fig. 1A zeigt einen Behälter 12 eines erfindungsgemäßen Flüssigkeitsbehälters mit einem Bodenabschnitt (nicht bezeichnet) und einem im Wesentlichen zylinderförmigen Mantelabschnitt 26. Der in Fig. 1A gezeigte Behälter 12 ist einteilig aus einem Monoblock eines massiven Natursteins hergestellt. In einer in Fig. 1A oberen Endfläche des Mantelabschnitts 26 ist eine Vielzahl von Verankerungslöchern 74 zum Verankern eines Dübels oder eines anderen Verbindungsmittels ausgebildet.

Fig. 1 B zeigt den einteiligen, aus einem Monoblock 20 eines massiven Natursteins 18 hergestellten Behälter 12 aus der Fig. 1A, auf den zusätzlich ein Deckel 36, der seinerseits ebenfalls einteilig aus einem Monoblock eines massiven Natursteins hergestellt ist. In einem Umfangsbereich des Deckels 36 ist eine Vielzahl von Durchlöchern 76 in Rapport mit den Verankerungslöchern 74 in der oberen Endfläche des Mantelabschnitts 26 des Behälters 12 ausgebildet. Eine Dichtung 72, wie etwa ein Dichtring bzw. O-Ring, ist auf der oberen Endfläche des Mantelabschnitts 26 des Behälters 12 aufgelegt. Eine Vielzahl von Verschlussschrauben 78 ist jeweils durch eines der Durchlöcher 76 hindurch geführt und jeweils in einem Dübel in einem der Verankerungslöcher 74 festgeschraubt, so dass die Dichtung 72 zusammengedrückt wird und einen Spalt zwischen der Endfläche des Mantelabschnitts 26 des Behälters 12 und der inneren (in Fig. 1 B unteren) Oberfläche des Deckels 36 abdichten kann. In dem Deckel 36 ist ferner eine Einfüllöffnung 68 zum Einfüllen von Flüssigkeit in den Behälter 12 vorgesehen.

Ein einteiliger Behälter 12, wie in den Figuren 1A und 1 B gezeigt, mit einer Wandungsdicke von etwa 10 cm und einem Manteldurchmesser von etwa 150 cm wurde als erster Prototyp hergestellt und in einem Weingut bei der Herstellung von Wein (Weißwein) verwendet.

Die Figuren 2A und 2B zeigen einen im Hinblick auf die Herstellbarkeit verbesserten (die Herstellung vereinfachenden) zweiten Prototyp eines erfindungsgemäßen Flüssigkeitsbehälters 10. Der in den Figuren 2A und 2B gezeigte Flüssigkeitsbehälter 10 umfasst einen Behälter 12, der aus einem einteiligen, aus einem Monoblock eines massiven Natursteins 18 hergestellten, scheibenförmigen Bodenabschnitt 22 und einem ebenfalls einteiligen, aus einem Monoblock eines massiven Natursteins 18 hergestellten, im Wesentlichen zylinderförmigen Mantelabschnitt 26 aufgebaut ist, und einen Deckel 36, der ebenfalls einteilig aus einem Monoblock eines massiven Natursteins 18 hergestellt ist. In einer in Fig. 2A oberen Endfläche des Mantelabschnitts 26 ist eine Vielzahl von Verankerungslöchern 74 zum Verankern eines Dübels oder eines anderen Verbindungsmittels ausgebildet. In einem Umfangsbereich des Deckels 36 ist eine Vielzahl von Durchlöchern 76 in Rapport mit den Verankerungslöchern 74 in der oberen Endfläche des Mantelabschnitts 26 des Behälters 12 ausgebildet. Ferner ist in dem Deckel 36 eine Einfüllöffnung 68 zum Einfüllen von Flüssigkeit ausgebildet.

Wie in Fig. 2B gezeigt, umfasst der Flüssigkeitsbehälter 10 ferner einen ersten Flüssigkeitsauslass 44 als sogenannten Klarauslass, der in dem Mantelabschnitt 26 in einer Höhe von ca. 12 bis 25 cm (im Beispiel des zweiten Prototyps 20 cm) oberhalb der Oberseite des Bodenabschnitts 22 ausgebildet und mit einem aus Edelstahl hergestellten, öffen- und verschließbaren Auslassventil (nicht bezeichnet), wie etwa einem Ablasshahn, ausgestattet ist. Der erste Flüssigkeitsauslass 44 dient zum Ablassen bzw. Entnehmen von fertig hergestellter Flüssigkeit aus dem Flüssigkeitsbehälter 10, wobei ein etwaiger Bodensatz in dem Flüssigkeitsbehälter 10 unterhalb dieses Flüssigkeitsauslasses 44 verbleiben kann. Der in Fig. 2B gezeigte Flüssigkeitsbehälter 10 umfasst ferner einen zweiten Flüssigkeitsauslass 46, der in dem Bodenabschnitt 22 ausgebildet und mit einem ebenfalls aus Edelstahl hergestellten, offen- und verschließbaren Auslassventil (nicht bezeichnet), wie etwa einem Ablasshahn, ausgestattet ist. Der zweite Flüssigkeitsauslass 46 dient zum Ablassen von Flüssigkeit, wie etwa der Flüssigkeit, die den Bodensatz enthält, oder z.B. im Rahmen eines Reinigungsprozesses zum Ablassen einer Reinigungsflüssigkeit. Der erste und der zweite Flüssigkeitsauslass 44 und 46 sind aus lebensmittelechten Materialien hergestellt und umfassen ausschließlich Komponenten, wie etwa Dichtungen, die ebenfalls aus lebensmittelechten Materialien hergestellt sind.

Der in Fig. 2B gezeigte Flüssigkeitsbehälter 10 umfasst ferner eine im Wesentlichen ringförmig ausgebildete, erste Dichtung 70, die etwa aus einem Klebemittel oder einem Fugendichtmittel hergestellt ist und zum Abdichten eines Spalts zwischen einer (in Fig. 2B unteren) Endabschnittsfläche des Mantelabschnitts 26 und einer (in Fig. 2B oberen) Oberfläche des Bodenabschnitts 22 dient. Der Flüssigkeitsbehälter 10 umfasst ferner eine im Wesentlichen ringförmig ausgebildete, zweite Dichtung 72, die etwa aus Moosgummi hergestellt sein kann, und zum Abdichten eines Spalts zwischen einer (in Fig. 2B oberen) Endabschnittsfläche des Mantelabschnitts 26 und einer (in Fig. 2B unteren) Oberfläche des Deckels 36 dient. Die erste Dichtung 70 und die zweite Dichtung 72 sind aus lebensmittelechten Materialien hergestellt.

Fig. 2C zeigt einen Deckel 36 für einen Behälter 12, der sich von dem in den Figuren 2A und 2B gezeigten Deckel 36 dadurch unterscheidet, dass er nicht einteilig ausgebildet ist, sondern eine Deckeltrageschicht 40 und eine flächig damit verbundene Deckeldeckschicht 42 umfasst. Dabei ist lediglich die Deckeldeckschicht 42 aus massivem Naturstein hergestellt. Die Deckeltrageschicht 40 ist aus Beton oder einem anderen aushärtbaren Kunststein ausgebildet. In dem Deckel 36 ist eine Einfüllöffnung 66 zum Einfüllen von Flüssigkeit vorgesehen.

Entsprechend dem in Fig. 2C gezeigten Deckel 36 kann auch der in den Figuren 2A und 2B gezeigte Bodenabschnitt 22 so modifiziert werden, dass er nicht einteilig ausgebildet ist, sondern eine Bodentrageschicht (nicht gezeigt) und eine flächig damit verbundene Bodendeckschicht (nicht gezeigt) umfasst. Dabei kann lediglich die Bodendeckschicht aus massivem Naturstein hergestellt sein, und die Bodentrageschicht kann aus Beton oder einem anderen aushärtbaren Kunststein ausgebildet sein.

Auch an dem in den Figuren 1A und 1 B gezeigten, aus einem Monoblock eines massiven Natursteins herausgearbeiteten Behälter 12 können im Mantelabschnitt 26 ein erster Flüssigkeitsauslass (nicht gezeigt) mit einem öffen- und verschließbaren Auslassventil, wie etwa einem Ablasshahn, in einem vorbestimmten Abstand zu (bzw. Höhe über) dem Bodenabschnitt 22, etwa als Klarauslass, und in dem Bodenabschnitt 22 ein zweiter Flüssigkeitsauslass (nicht gezeigt) mit einem öffen- und verschließbaren Auslassventil, wie etwa einem Ablasshahn, etwa als Reinigungsauslass, vorgesehen sein.

Mit Verweis auf die Figuren 1 B und 2B sei noch erwähnt, dass es bei einer Benutzung der gezeigten Flüssigkeitsbehälter 10, wie etwa in der Getränkeherstellung, wichtig ist, dass ein im Bodenabschnitt 22 vorgesehener Flüssigkeitsauslass (nicht gezeigt) mit einem an einer Unterseite des Bodenabschnitts angebrachten, öffen- und verschließbaren Auslassventil zugänglich und betätigbar ist, dass ein Raum unterhalb des Flüssigkeitsbehälters 10 zugänglich ist und gereinigt werden kann, und dass in dem Raum unterhalb des Flüssigkeitsbehälters 10 eine Luftzirkulation möglich ist. Um all dieses zu ermöglichen, ist vorgesehen, den Flüssigkeitsbehälters 10 auf einem Unterbau anzuordnen. Ein geeigneter Unterbau kann zwei parallel angeordnete liegende Steinriegel (nicht gezeigt), d.h. Säulen aus Naturstein mit z.B. dreieckigem, quadratischen oder rechteckförmigen Querschnitt, umfassen, auf denen der Bodenabschnitt 22 des Flüssigkeitsbehälters 10 aufgesetzt wird.

Bei einer Benutzung der in den Figuren 1 und 2 gezeigten Flüssigkeitsbehälter 10, wie etwa in der Getränkeherstellung, ist es auch wichtig, dass der Flüssigkeitsbehälter 10 ggf. in einem mit Flüssigkeit befüllten Zustand, von einer ersten Aufstellposition zu einer zweiten Aufstellposition versetzt werden kann. Dabei kann ein Gabelstapler benutzt werden. Um das Versetzen des Flüssigkeitsbehälters 10 zu ermöglichen, kann vorgesehen sein, dass im Bodenabschnitt 22 sich horizontal erstreckende Ausnehmung bzw. Bohrungen (nicht gezeigt) vorgesehen sind, in die die Greifgabeln eines Gabelstaplers eingreifen können, um den Flüssigkeitsbehälter 10 anzuheben.

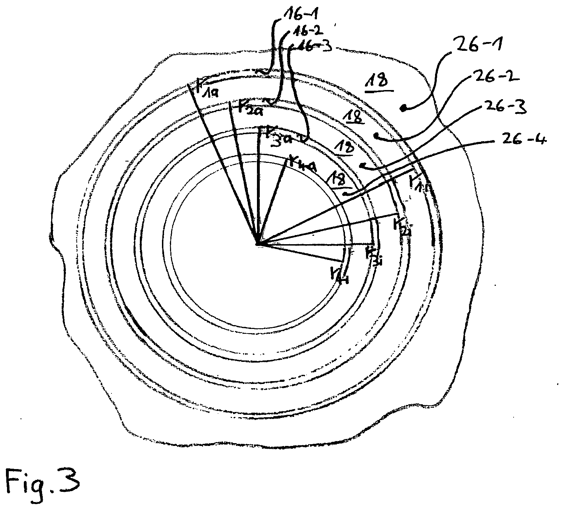

In der Fig. 3 ist eine Ausführungsform des Verfahrens gemäß dem zweiten Aspekt der Erfindung veranschaulicht. Das Verfahren dient zur Herstellung eines Flüssigkeitsbehälters zur Herstellung und/oder Lagerung von zum Trinkkonsum vorgesehenen Flüssigkeiten. In dem Verfahren wird zunächst ein Block (nicht bezeichnet) aus einem massiven Naturstein 18 bereitgestellt (Implementierung des Schritts (a)). Dann wird mittels eines ersten Hohlbohrkernbohrers (nicht gezeigt) mit einem ersten Außendurchmesser d₁ₐ = 2*r₁ₐ, wobei r₁ₐ der entsprechende erste Außenradius ist, in dem Block eine im Wesentlichen zylinderförmige erste Innenwandoberfläche 16-1 mit einem ersten Innendurchmesser, der nominal dem ersten Außendurchmesser des Hohlbohrkernbohrers entspricht, ausgebohrt. Die dabei entstehende zylinderförmige erste Innenwandoberfläche 16-1 kann direkt oder gegebenenfalls nach Ausführen eines weiter unten beschriebenen Oberflächenbearbeitungsschritts als Innenwandoberfläche 16-1 eines ersten Mantelabschnitts 26-1 eines ersten Flüssigkeitsbehälters vorgesehen sein (Implementierung des Schritts (b)).

Was in Fig. 3 nicht dargestellt ist, ist, dass nach dem Schritt (b) ein Bodenabschnitt (nicht gezeigt) aus massivem Naturstein mit einer im Wesentlichen ebenen Oberfläche, die direkt oder gegebenenfalls nach Ausführen eines Oberflächenbearbeitungsschritts als Bodenabschnitt der Innenwandoberfläche des ersten Flüssigkeitsbehälters vorgesehen ist, bereitgestellt (Implementierung des Schritts (c)) und mit dem Mantelabschnitt 26-1 an einem Ende des Mantelabschnitts 26-1 flüssigkeitsdicht verbunden wird. Dann wird noch ein Deckelabschnitt (nicht gezeigt) aus massivem Naturstein mit einer im Wesentlichen ebenen Oberfläche, die direkt oder gegebenenfalls nach Ausführen eines Oberflächenbearbeitungsschritts als Deckelabschnitt der Innenwandoberfläche des Flüssigkeitsbehälters vorgesehen ist, bereitgestellt und mit dem Mantelabschnitt 26-1 an dessen anderen Ende flüssigkeitsdicht und lösbar verbunden.

In dem in Fig. 3 veranschaulichten Verfahren wird als weiteres Ergebnis des Ausbohrens mit dem ersten Hohlkernbohrer (Schritt (b)) ein im Wesentlichen zylinderförmiger Bohrkern 26-2, 26-3, 26-4 aus massivem Naturstein mit einem ersten Außendurchmesser erzeugt. Dabei entspricht der erste Außendurchmesser nominal einem Innendurchmesser d₁ᵢ = 2*ᵣ₁ᵢ (r₁ᵢ ist der entsprechende Innenradius) des ersten Hohlbohrkernbohrers. In den im Schritt b) erhaltenen, im Wesentlichen zylinderförmigen Bohrkern 26-2, 26-3, 26-4 aus massivem Naturstein, wird mittels eines zweiten Hohlbohrkernbohrers (nicht gezeigt) mit einem zweiten Außendurchmesser d₂ₐ = 2*r₂ₐ, wobei r₂ₐ der entsprechende zweite Außenradius ist, der um einen vorbestimmten Wert kleiner als der erste Außendurchmesser d₁ₐ = 2*r₁ₐ ist, und koaxial zu der mit dem ersten Hohlbohrkernbohrer (im Schritt (b)) durchgeführten ersten Ausbohrung, eine im Wesentlichen zylinderförmige zweite Innenwandoberfläche 16-2 mit einem zweiten Innendurchmesser so ausgebohrt, dass ein als Mantelabschnitt 26-2 eines zweiten Flüssigkeitsbehälters verwendbarer Zylindermantel aus massivem Naturstein entsteht, dessen zweite Innenwandoberfläche direkt oder gegebenenfalls nach Ausführen eines Oberflächenbearbeitungsschritts als Innenwandoberfläche des Mantelabschnitts des zweiten Flüssigkeitsbehälters vorgesehen ist (Implementierung des Schritts (d)).

Dann wird in den im Schritt (d) ebenfalls erhaltenen, im Wesentlichen zylinderförmigen Bohrkern 26-3, 26-4, mittels eines dritten Hohlbohrkernbohrers mit einem dritten Außendurchmesser d₃ = 2*r₃, wobei r₃ der entsprechende dritte Außenradius ist, der um einen vorbestimmten Wert kleiner als der zweite Außendurchmesser ist, und koaxial zu den in den Schritten b) und d) durchgeführten ersten und zweiten Ausbohrungen, eine im Wesentlichen zylinderförmige dritte Innenwandoberfläche 16-3 mit einem dritten Innendurchmesser so ausgebohrt, dass ein als Mantelabschnitt 26-3 eines dritten Flüssigkeitsbehälters verwendbarer Zylindermantel aus massivem Naturstein entsteht, dessen dritte Innenwandoberfläche direkt oder gegebenenfalls nach Ausführen eines Oberflächenbearbeitungsschritts als Innenwandoberfläche des Mantelabschnitts des dritten Flüssigkeitsbehälters vorgesehen ist (Implementierung des Schritts (e)). Es ist offensichtlich, dass die Schritte (d) und (e) mit jeweils weiteren Hohlbohrkernbohrern mit sukzessive kleineren Durchmessern wiederholt werden können.

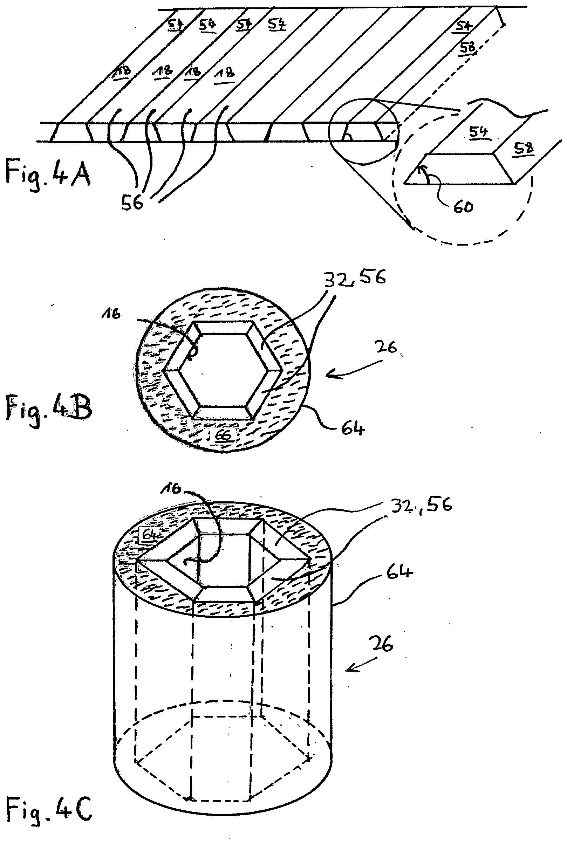

Die Figuren 4A bis 5C veranschaulichen weitere Ausführungsformen des Aufbaus eines erfindungsgemäßen Flüssigkeitsbehälters 10 und Verfahren gemäß dem dritten Aspekt der Erfindung zur Herstellung eines erfindungsgemäßen Flüssigkeitsbehälters 10.

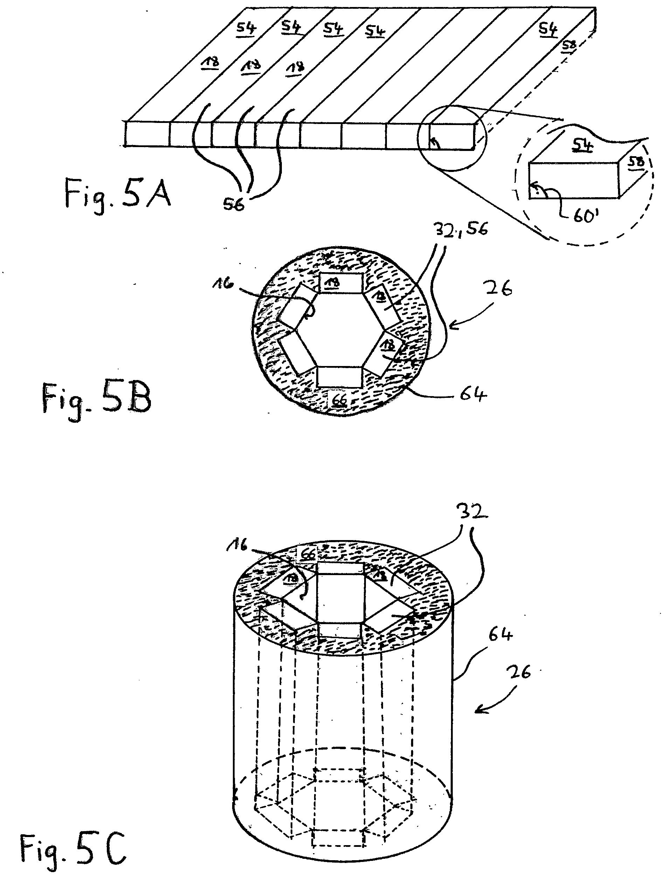

Wie in den Figuren 4A und 5A gezeigt, wird in Ausführungsformen des Verfahrens gemäß dem dritten Aspekt zunächst ein im Wesentlichen plattenförmig ausgebildeter Block aus einem massiven Naturstein 18 bereitgestellt, der zwei im Wesentlichen parallel und entgegengesetzt zueinander angeordnete Plattenoberflächen 54 aufweist (Implementierung des Schritts (A)). Dann werden aus dem plattenförmigen Block mindestens zwei, im Beispiel der Figuren 4B, 4C, 5B und 5C sechs, Längsabschnitte 56 mit jeweils zwei Längsseitenflächen 58 ausgesägt (Implementierung des Schritts (B)). Die Längsseitenflächen 58 bilden in Bezug auf eine der Plattenoberflächen 54 entweder einen spitzen Winkel 60 (wie in Fig. 4A gezeigt) oder einen rechten Winkel 60' (wie in Fig. 5A gezeigt).

Wenn die Längsseitenflächen 58 in Bezug auf eine der Plattenoberflächen 54 einen spitzen Winkel 60 bilden, wie in Fig. 4A gezeigt, sind die beiden entgegengesetzten Längsseitenflächen 58 eines Längsabschnitts 56 zueinander geneigt ausgebildet. Dies ermöglicht, dass die jeweils zwei Längsabschnitte 56 auf Gehrung aneinander angrenzend angeordnet werden können. Entsprechend werden drei oder mehr Längsabschnitte 56 aus der Fig. 4A zu einem Hohlkörper zusammengesetzt (Implementierung des Schritt (C)), so dass die Plattenoberflächen 54 der Längsabschnitte 56 die Innenwandoberfläche 16 eines Mantelabschnitts 26 eines Flüssigkeitsbehälters bilden, wie in Fig. 4B gezeigt. Dann wird der durch Zusammensetzen der Längsabschnitte 56 erhaltene Hohlkörper mit Beton 66 oder mit einem gießbaren und/oder formbaren, aushärtbaren Kunststein umgossen oder umspritzt, so dass eine äußere Mantelfläche 62 des Hohlkörpers vollständig mit Beton und/oder aushärtbarem Kunststein überdeckt ist, wie in Fig. 4B angedeutet, und der Beton 66 oder der Kunststein aushärten gelassen (Implementierung des Schritts (D)). Auf diese Weise wird ein Mantelabschnitt 26 hergestellt, wie in Fig. 4C gezeigt, dessen äußere Mantelfläche 64 vollständig mit ausgehärtetem Beton 66 oder Kunststein bedeckt ist, und dessen Innenwandoberfläche 16 im Wesentlichen vollständig als Oberfläche eines massiven Natursteins 18, hier als die Plattenoberflächen 54 der gemäß Fig. 4A bereitgestellten Längsabschnitte 56 aus massivem Naturstein 18, ausgebildet ist.

Wenn die Längsseitenflächen 58 in Bezug auf eine der Plattenoberflächen 54 einen rechten Winkel 60' bilden, wie in Fig. 5A gezeigt, sind die beiden entgegengesetzten Längsseitenflächen 58 eines Längsabschnitts 56 parallel zueinander ausgebildet. In diesem Fall ist es nicht möglich, jeweils zwei Längsabschnitte 56 auf Gehrung aneinander angrenzend anzuordnen, jedoch können jeweils zwei Längsabschnitte 56 so angeordnet werden, dass jeweils zwischen einer Plattenoberfläche 54 und einer Längsseitenfläche 58 eines Längsabschnitts 56 ausgebildeten Längskanten von zwei benachbarten Längsabschnitten 56 miteinander in Kontakt kommen können. Entsprechend werden drei oder mehr Längsabschnitte 56 aus der Fig. 5A zu einem Hohlkörper zusammengesetzt (Implementierung des Schritt (C)), so dass die Plattenoberflächen 54 der Längsabschnitte 56 die Innenwandoberfläche 16 eines Mantelabschnitts 26 eines Flüssigkeitsbehälters bilden, wie in Fig. 5B gezeigt. Dann wird der durch Zusammensetzen der Längsabschnitte 56 erhaltene Hohlkörper mit Beton 66 oder mit einem gießbaren und/oder formbaren, aushärtbaren Kunststein umgossen oder umspritzt, so dass eine äußere Mantelfläche 62 des Hohlkörpers vollständig mit Beton und/oder aushärtbarem Kunststein überdeckt ist, wie in Fig. 5B angedeutet, und der Beton 66 oder der Kunststein aushärten gelassen (Implementierung des Schritts (D)). Auf diese Weise wird ein Mantelabschnitt 26 hergestellt, wie in Fig. 5C gezeigt, dessen äußere Mantelfläche 64 vollständig mit ausgehärtetem Beton 66 oder Kunststein bedeckt ist und dessen Innenwandoberfläche 16 im Wesentlichen vollständig als Oberfläche eines massiven Natursteins 18, hier als die Plattenoberflächen 54 der gemäß Fig. 5A bereitgestellten Längsabschnitte 56 aus massivem Naturstein 18, ausgebildet ist.

Um auf der Grundlage eines gemäß den Figuren 4A bis 4C oder gemäß den Figuren 5A bis 5C hergestellten Mantelabschnitts 26 einen Flüssigkeitsbehälter entsprechend dem in der Fig. 2B gezeigten fertig zu stellen, wird noch ein als Bodenplatte ausgebildeter Bodenabschnitt 22 (z.B. wie in Fig. 2A), von dem zumindest eine als Innenwandoberfläche vorgesehene Seite im Wesentlichen vollständig als Oberfläche eines massiven Natursteins ausgebildet ist, bereitgestellt (Implementierung des Schritts (E)). Ein derartiger Bodenabschnitt 22 wird mit einem Endbereich des in Fig. 4C gezeigten Mantelabschnitts 26 flüssigkeitsdicht verbunden, wie in Fig. 2B gezeigt, so dass ein an dem anderen Endbereich des Mantelabschnitts 26 offener Behälter 12 hergestellt ist (Implementierung des Schritts (F)).

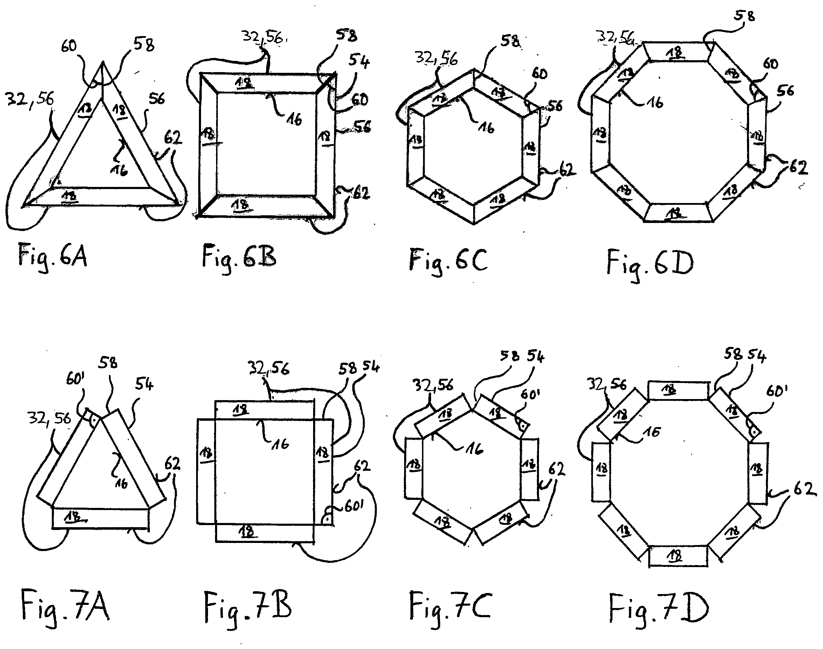

Die Figuren 6A bis 6D veranschaulichen Variationen der Ausgestaltung (vgl. Fig. 4A, Schritt (A)) und Anordnung (vgl. Fig. 4B, Schritt (B)) von gemäß Fig. 4A hergestellten Längsabschnitten 56, bei denen jeweils zwischen einer Plattenoberfläche 54 und einer Längsseitenfläche 58 ein spitzer Winkel 60 ausgebildet ist, so dass jeweils zwei benachbarte Längsabschnitte 56 auf Gehrung in Kontakt miteinander angeordnet werden können.

In Fig. 6A sind drei Längsabschnitte 56 jeweils an ihren Längsseitenflächen 58 auf Gehrung miteinander angeordnet und umringen (definieren) einen Hohlraum, der nach einem Umgießen oder Umspritzen mit Beton oder einem aushärtbarem Kunststein (vgl. Fig. 4B, Schritt (C)) ein Innenraum eines Mantelabschnitts eines Behälters werden kann. In Fig. 6B sind vier, in Fig. 6C sechs und in Fig. 6D acht Längsabschnitte 56 jeweils an ihren Längsseitenflächen 58 auf Gehrung miteinander angeordnet und umringen (definieren) einen Hohlkörper, der die Innenwandoberfläche 16 eines Mantelabschnitts 26 eines Flüssigkeitsbehälters bilden kann, wie in Fig. 4C veranschaulicht.

Die Figuren 7A bis 7D veranschaulichen Variationen der Ausgestaltung (vgl. Fig. 5A, Schritt (A)) und Anordnung (vgl. Fig. 5B, Schritt (B)) von gemäß Fig. 5A hergestellten Längsabschnitten 56. Bei diesen Längsabschnitten 56 ist jeweils zwischen einer Plattenoberfläche 54 und einer Längsseitenfläche 58 ein spitzer Winkel 60 ausgebildet. So können jeweils zwei benachbarte Längsabschnitte 56 so zueinander angeordnet werden, dass deren Längskanten in Kontakt miteinander sind.

In Fig. 7A sind drei Längsabschnitte 56 jeweils an ihren Längskanten in Kontakt miteinander angeordnet und umringen (definieren) einen Hohlraum, der nach einem Umgießen oder Umspritzen mit Beton oder einem aushärtbarem Kunststein (vgl. Fig. 5B, Schritt (C)) ein Innenraum eines Mantelabschnitts eines Behälters werden kann. In Fig. 7B sind vier, in Fig. 7C sechs und in Fig. 7D acht Längsabschnitte 56 jeweils an ihren Längskanten in Kontakt miteinander angeordnet und umringen (definieren) einen Hohlkörper, der die Innenwandoberfläche 16 eines Mantelabschnitts 26 eines Flüssigkeitsbehälters bilden kann, wie in Fig. 5C veranschaulicht.

Die in den Figuren 4B, 5B, 6A bis 6D und 7A bis 7D gezeigten Anordnungen von jeweils aus massivem Naturstein hergestellten Längsabschnitten 56 veranschaulichen, dass die Innenwandoberfläche 16 eines Mantelabschnitts 26 eines Behälters 12 in Umfangsrichtung in mehrere (zwei oder mehr) Segmente, z.B. in drei Segmente (wie in Fig. 6A und 7A), in vier Segmente (wie in Fig. 6B und 7B), in sechs Segmente (wie in Fig. 6C und 7C) oder in acht Segmente (wie in Fig. 6D und 7D) unterteilt sein kann. Jedoch kann die Anzahl der in Umfangsrichtung aneinander gereihten Segmente auch zwei, fünf, sieben oder eine größere ganze Zahl sein.

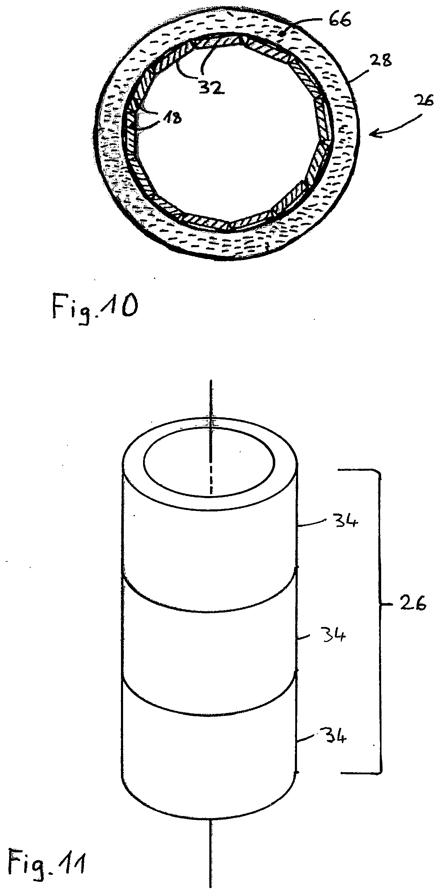

Es sei angemerkt, dass ein Mantelabschnitt 26 eines Behälters 12 nicht nur in seiner Umfangsrichtung, sondern auch in seiner Längsrichtung, z.B. axialen Richtung, in mehrere (zwei oder mehr) Mantelsegmente unterteilt sein kann, wie in Fig. 11 beispielhaft veranschaulicht. Fig. 11 zeigt schematisch einen aus drei erfindungsgemäßen Mantelsegmenten 34 zusammengesetzten Mantelabschnitt 26 für einen erfindungsgemäßen Behälter.

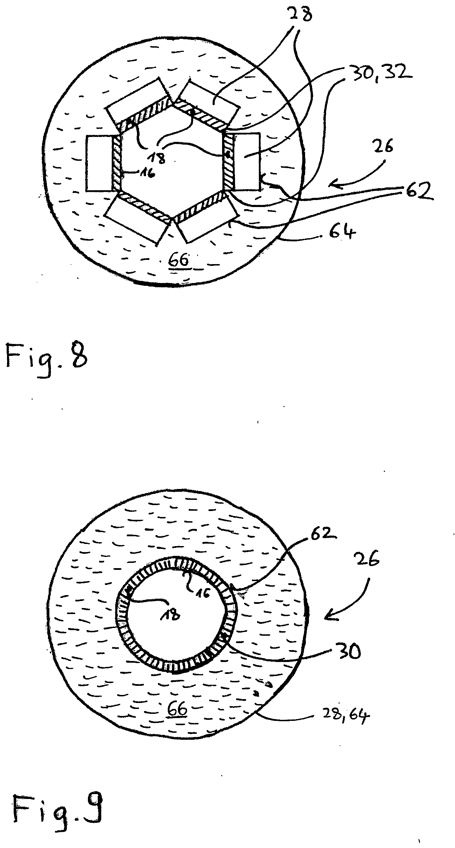

Fig. 8 zeigt schematisch einen erfindungsgemäßen Mantelabschnitt 26 für einen erfindungsgemäßen Flüssigkeitsbehälter, der als eine Variation der in Fig. 5B gezeigten Ausführungsform eines Mantelabschnitts 26 anzusehen ist. Bei dem in Fig. 8 gezeigten Mantelabschnitt 26 sind anstelle der in Fig. 5B gezeigten Längsabschnitte aus massivem Naturstein 18 Kompositkörper mit Beton 66 umgossen. Jeder der in Fig. 8 gezeigten Kompositkörper besteht aus einer Trageschicht 28, die nicht aus Naturstein bzw. massivem Naturstein besteht, und einer Deckschicht 30 bzw. einem Deckschichtsegment 32, die/das aus massivem Naturstein 18 ausgebildet ist und mit der Tragschicht 28 flächig verbunden ist. Diese Kompositkörper können in Formen, die den in den Figuren 6A bis 7D veranschaulichten, vielfältigen möglichen Formen der Längsabschnitte 56 entsprechen, bereitgestellt werden und daraus erfindungsgemäße Behälter 12 hergestellt werden.

Fig. 9 zeigt schematisch einen erfindungsgemäßen Mantelabschnitt 26 für einen erfindungsgemäßen Flüssigkeitsbehälter, der als eine Variation der in Fig. 2B gezeigten Ausführungsform eines Mantelabschnitts 26 aus massivem Naturstein anzusehen ist. Bei dem in Fig. 8 gezeigten Mantelabschnitt 26 ist anstelle des in Fig. 2B gezeigten, relativ dicken Mantelabschnitts aus massivem Naturstein ein rohrförmiger bzw. zylinderförmiger Körper (Monoblock) aus Naturstein, jedoch mit einer relativ kleineren Dicke bereitgestellt und mit Beton 66 oder einem aushärtbaren Kunststein umgossen.

Bezüglich der Figuren 4B und 5B wurde beschrieben, dass eine einen Hohlkörper definierende Anordnung von mehreren Längsabschnitten 56 mit Beton 66 oder einem gießbaren und aushärtbaren Kunststein umspritzt bzw. umgossen werden kann. In Variation dieses Verfahrensschritts ist es auch möglich, einen z.B. aus Beton oder einem aushärtbaren Kunststein gegossenen, z.B. rohrförmigen Körper als eine Trageschicht 28 bereitzustellen und an deren Innenoberfläche eine Vielzahl von Längsabschnitten 56 aus massivem Naturstein oder alternativ auch in Längsrichtung (axialer Richtung) in kleinere Segmente unterteilte, z.B. rechteckigförmige Platten, wie etwa Fliesen, mit einer Oberfläche aus massivem Naturstein als eine Deckschicht 30 anzubringen, z.B. anzukleben. Die z.B. rechteckförmigen Platten, wie etwa Fliesen, bilden dabei Deckschichtsegmente 32 einer Deckschicht 30 aus massivem Naturstein, die an einer Innenoberfläche einer Tragschicht 28, die nicht aus Naturstein zu sein braucht, befestigt sind, so dass eine Innenwandoberfläche unterteilt in Deckschichtsegmente 32, jedoch im Wesentlichen vollständig aus massivem Naturstein ausgebildet ist.

### Bezugszeichenliste

- 10: Flüssigkeitsbehälter
- 12: Behälter
- 14: Behälterwandung
- 16: Innenwandoberfläche
- 18: Naturstein
- 20: Monoblock
- 22: Bodenabschnitt
- 24: Dichtung
- 26: Mantelabschnitt
- 28: Trageschicht
- 30: Deckschicht
- 32: Deckschichtsegment
- 34: Mantelsegment
- 36: Deckel
- 38: Deckeloberfläche
- 40: Deckeltrageschicht
- 42: Deckeldeckschicht
- 44: erster Flüssigkeitsauslass
- 46: zweiter Flüssigkeitsauslass
- 48: erste Innenwandung
- 50: zweite Innenwandung
- 52: dritte Innenwandung
- 54: Plattenoberfläche
- 56: Längsabschnitt
- 58: Längsseitenfläche
- 60: spitzer Winkel
- 60': rechter Winkel
- 62: äußere Mantelfläche
- 64: Außenschicht
- 66: Beton
- 68: Einfüllöffnung
- 70: erste Dichtung
- 72: zweite Dichtung
- 74: Verankerungsloch
- 76: Durchloch
- 78: Verschlussschraube
- r₁ₐ: erster Außenradius
- d₁ₐ = 2*r₁ₐ: erster Außendurchmesser
- r₁ᵢ: erster Innenradius
- d₁ᵢ = 2*r₁ᵢ: erster Innendurchmesser
- r₂ₐ: zweiter Außenradius
- d₂ₐ = 2*r₂ₐ: zweiter Außendurchmesser
- r₂ᵢ: zweiter Innenradius
- d₂ᵢ = 2*ᵣ₂ᵢ: zweiter Innendurchmesser
- r₃ₐ: dritter Außenradius
- d₃ₐ = 2*r₃ₐ: dritter Außendurchmesser
- r₃ᵢ: dritter Innenradius
- d₃ᵢ = 2*r₃ᵢ: dritter Innendurchmesser

## Patentansprüche

1. Flüssigkeitsbehälter (10) zur Herstellung und/oder Lagerung von zum Trinkkonsum vorgesehenen, insbesondere alkoholhaltigen, Flüssigkeiten, wobei der Flüssigkeitsbehälter (10) einen an einer, insbesondere oberen, Seite offenen Behälter (12) mit einer Behälterwandung (14) mit einer Innenwandoberfläche (16) umfasst, wobei die Innenwandoberfläche (16) zumindest teilweise, insbesondere im Wesentlichen vollständig, als eine Oberfläche eines massiven Natursteins (18) ausgebildet ist, **dadurch gekennzeichnet, dass** ein aus Naturstein ausgebildeter Teil der Innenwandoberfläche (16) zunächst mittels Spalten oder Bohren oder Sägen des Natursteins hergestellt oder der Naturstein mit einem Sandstrahl behandelt worden ist und infolgedessen eine erste Rauigkeit aufgewiesen hat, und anschließend einer Oberflächenbehandlung unterzogen worden ist, die bewirkt hat, dass die Rauigkeit der behandelten Innenwandoberfläche (16) in Bezug zu der zunächst mittels Spalten oder Sägen oder Bohren oder der Behandlung mit dem Sandstrahl hergestellten ersten Rauigkeit vergrößert worden ist.

2. Flüssigkeitsbehälter nach Anspruch 1, **dadurch gekennzeichnet,**
**dass** die Innenwandoberfläche (16) eine durch Ausführen eines Oberflächenbearbeitungsschritts gestockte, scharrierte, gespitzte und/oder geflammte Oberfläche, umfasst und/oder
**dass** der Naturstein (18) Granit oder Basalt ist und insbesondere kein kalkreicher Naturstein, wie etwa Marmor, ist.

3. Flüssigkeitsbehälter nach Anspruch 1 oder 2, **gekennzeichnet durch** einen Deckel (36) zum Abdecken der offenen Seite des Behälters (12),
wobei der Deckel (36) eine als Deckelabschnitt der Innenwandoberfläche des Flüssigkeitsbehälters vorgesehene Deckeloberfläche (38) hat, die im Wesentlichen vollständig als eine Oberfläche eines massiven Natursteins (18) ausgebildet ist, und/oder **dadurch gekennzeichnet**, und/oder
wobei der Deckel (36) im Wesentlichen vollständig, insbesondere als ein Monoblock, aus einem massiven Naturstein (18) hergestellt ist, und/oder
wobei der Deckel (36) eine Deckeltrageschicht (40) und eine an einer Innenseite der Deckeltrageschicht (40) angeordnete Deckeldeckschicht (42) umfasst, wobei die Deckeldeckschicht (30) im Wesentlichen vollständig, insbesondere als ein Monoblock, aus einem massiven Naturstein (18) hergestellt ist.

4. Flüssigkeitsbehälter nach einem der Ansprüche 1 bis 3, **dadurch gekennzeichnet,**
**dass** die Behälterwandung (14) des Behälters (12) im Wesentlichen vollständig, insbesondere als ein Monoblock (20), aus einem massiven Naturstein (18) hergestellt ist, oder
**dass** die Behälterwandung (14) des Behälters (12) einen Bodenabschnitt (22) und einen Mantelabschnitt (26) umfasst,
wobei der Mantelabschnitt (26) im Wesentlichen zylinderförmig ist und im Wesentlichen vollständig, insbesondere als ein Monoblock, aus massivem Naturstein (18) hergestellt ist, oder
der Mantelabschnitt (26) in einer Umfangsrichtung und/oder in einer zu der offenen Seite des Behälters (12) weisenden, z.B. axialen, Richtung in mindestens zwei aneinandergrenzende Mantelsegmente (34) unterteilt ist, und/oder
wobei der Bodenabschnitt (22) im Wesentlichen plattenförmig und im Wesentlichen vollständig, insbesondere als ein Monoblock, aus massivem Naturstein (18) hergestellt ist.

5. Flüssigkeitsbehälter nach einem der Ansprüche 1 bis 3,
**dadurch gekennzeichnet, dass** die Behälterwandung (14) eine Trageschicht (28) und eine an einer Innenseite der Trageschicht (28) angeordnete Deckschicht (30) umfasst,
wobei die Deckschicht (30) zumindest teilweise, insbesondere im Wesentlichen vollständig, z.B. als ein Monoblock, mit einer als eine Oberfläche eines massiven Natursteins (18) ausgebildeten Innenoberfläche ausgebildet ist, oder
wobei die Deckschicht (30) in einer Umfangsrichtung und/oder in einer zu der offenen Seite des Behälters (12) weisenden, z.B. axialen, Richtung in mindestens zwei aneinandergrenzende Deckschichtsegmente (32) unterteilt ist, und/oder
wobei die Trageschicht (28) aus Beton (66) oder einem gießbaren und/oder formbaren, aushärtbaren Kunststein ausgebildet ist.

6. Verfahren zur Herstellung eines Flüssigkeitsbehälters (10) zur Herstellung und/oder Lagerung von zum Trinkkonsum vorgesehenen, insbesondere alkoholhaltigen, Flüssigkeiten, wobei eine Innenwandoberfläche (16) des Flüssigkeitsbehälters (10) zumindest teilweise, insbesondere im Wesentlichen vollständig, als Oberfläche eines massiven Natursteins (18) ausgebildet ist, wobei das Verfahren die folgenden Schritten umfasst:
(a) Bereitstellen eines Blocks aus einem massiven Naturstein, und
(b) mittels eines ersten Hohlbohrkernbohrers mit einem ersten Außendurchmesser (2*r₁ₐ), in dem Block Ausbohren einer im Wesentlichen zylinderförmigen ersten Innenwandoberfläche (16-1) mit einem ersten Innendurchmesser, der nominal dem ersten Außendurchmesser des Hohlbohrkernbohrers entspricht, wobei die erste Innenwandoberfläche (16-1) als Innenwandoberfläche (16) eines ersten Mantelabschnitts (26-1) eines ersten Flüssigkeitsbehälters vorgesehen ist,
**gekennzeichnet durch**
(c) Ausführen einer Oberflächenbearbeitung auf der als Innenwandoberfläche (16) vorgesehenen Oberfläche des Natursteins (18), wobei **durch** die Oberflächenbearbeitung die Rauhigkeit und/oder die spezifische Oberfläche der Innenwandoberfläche vergrößert wird.

7. Verfahren nach Anspruch 6, ferner **gekennzeichnet durch** den folgenden Schritt:
(d) Bereitstellen eines Bodenabschnitts (22) aus massivem Naturstein (18) mit einer im Wesentlichen ebenen Oberfläche, die direkt oder gegebenenfalls nach Ausführen eines Oberflächenbearbeitungsschritts als Bodenabschnitt der Innenwandoberfläche des ersten Flüssigkeitsbehälters vorgesehen ist,
und wobei insbesondere im Schritt (b) ein im Wesentlichen zylinderförmiger Bohrkern aus massivem Naturstein mit einem ersten Außendurchmesser erzeugt wird, wobei der erste Außendurchmesser nominal einem Innendurchmesser (2*r₂ᵢ) des ersten Hohlbohrkernbohrers entspricht, und wobei das Verfahren ferner den folgenden Schritt umfasst:
(e) in den im Schritt (b) erhaltenen, im Wesentlichen zylinderförmigen Bohrkern aus massivem Naturstein, mittels eines zweiten Hohlbohrkernbohrers mit einem zweiten Außendurchmesser (2*r₂ₐ), der um einen vorbestimmten Wert kleiner als der erste Außendurchmesser (2*r₁ₐ) ist, und koaxial zu der im Schritt b) durchgeführten Ausbohrung, Ausbohren einer im Wesentlichen zylinderförmigen zweiten Innenwandoberfläche (16-2) mit einem zweiten Innendurchmesser, so dass ein als Mantelabschnitt (26-2) eines zweiten Flüssigkeitsbehälters verwendbarer Zylindermantel aus massivem Naturstein (18) entsteht, dessen zweite Innenwandoberfläche (16-2) nach Ausführen eines Oberflächenbearbeitungsschritts als Innenwandoberfläche des Mantelabschnitts (26-2) des zweiten Flüssigkeitsbehälters vorgesehen ist.

8. Verfahren zur Herstellung eines Flüssigkeitsbehälters (10) zur Herstellung und/oder Lagerung von zum Trinkkonsum vorgesehenen, insbesondere alkoholhaltigen, Flüssigkeiten, wobei eine Innenwandoberfläche des Flüssigkeitsbehälters zumindest teilweise, insbesondere im Wesentlichen vollständig, als Oberfläche eines massiven Natursteins ausgebildet ist, wobei das Verfahren die folgenden Schritten umfasst:
(A) Bereitstellen eines Blocks aus einem massiven Naturstein, der zumindest in einem Teilbereich im Wesentlichen plattenförmig ausgebildet ist und zwei im Wesentlichen parallel zueinander angeordnete Plattenoberflächen (54) aufweist,
(B) aus dem plattenförmigen Teilbereich, Austrennen von mindestens zwei Längsabschnitten (56), die jeweils zwei Längsseitenflächen (58) aufweisen, wobei die Längsseitenfläche in Bezug auf eine der Plattenoberflächen entweder einen rechten Winkel (60') bilden oder, um zu ermöglichen, dass die mindestens zwei Längsabschnitte (56) auf Gehrung aneinander angrenzend angeordnet werden können, einen spitzen Winkel (60) bilden und in Bezug auf die eine der Plattenoberflächen (54) zueinander geneigt sind, und
(C) Anordnen von drei oder mehr Längsabschnitten (56), die aus den Schritten (A) und (B) erhalten worden sind, zu einem Hohlkörper, so dass innenseitig des Hohlkörpers angeordnete Plattenoberflächen (54) der Längsabschnitte (56) als Innenwandoberfläche (16) eines Mantelabschnitts (26) des Flüssigkeitsbehälters vorgesehen sind,
**gekennzeichnet durch**
(D) Ausführen einer Oberflächenbearbeitung auf der als Innenwandoberfläche (16) vorgesehenen Oberfläche des Natursteins (18), wobei **durch** die Oberflächenbearbeitung die Rauhigkeit und/oder die spezifische Oberfläche der Innenwandoberfläche vergrößert wird.

9. Verfahren nach Anspruch 8, ferner **gekennzeichnet durch** den folgenden Schritt:
(E) Umgießen oder Umspritzen des im Schritt (C) erhaltenen Hohlkörpers mit Beton (66) oder mit einem gießbaren und/oder formbaren, aushärtbaren Kunststein, und Aushärtenlassen des Betons (66) oder Kunststeins, so dass eine äußere Mantelfläche (62) des im Schritt (C) erhaltenen Hohlkörpers im Wesentlichen vollständig mit ausgehärtetem Beton (66) oder mit ausgehärtetem Kunststein bedeckt ist, um den Mantelabschnitt herzustellen,
und insbesondere ferner **gekennzeichnet durch** folgende Schritte:
(F) Bereitstellen eines als Bodenplatte ausgebildeten Bodenabschnitts (22), von dem zumindest eine als Innenwandoberfläche vorgesehene Seite im Wesentlichen vollständig als Oberfläche eines massiven Natursteins (18) ausgebildet ist, und
(G) flüssigkeitsdicht Verbinden des Bodenabschnitts (22) mit einem Endbereich des im Schritt (C) oder im Schritt (E) erhaltenen Hohlkörpers, so dass ein an dem anderen Endbereich des Hohlkörpers offener Behälter (12) entsteht.

10. Verfahren zur Herstellung eines Behälters (12) oder eines Mantelabschnitts (26) für einen Behälter (12) eines Flüssigkeitsbehälters (10) zur Herstellung und/oder Lagerung von zum Trinkkonsum vorgesehenen, insbesondere alkoholhaltigen, Flüssigkeiten, wobei eine Innenwandoberfläche des Mantelabschnitts (26) oder des Behälters (12) zumindest teilweise, insbesondere im Wesentlichen vollständig, als Oberfläche eines massiven Natursteins ausgebildet ist, wobei das Verfahren die folgenden Schritten umfasst:
(1) Bereitstellen eines Blocks mit einer im Wesentlichen zylinderförmigen Mantelinnenwandoberfläche oder mit einer Bodeninnenoberfläche und einer im Wesentlichen zylinderförmigen Mantelinnenwandoberfläche, als Trageschicht (28) für den Mantelabschnitt (26) oder für den Behälter (12), respektive, und
(2) im Wesentlichen flächendeckend Auskleiden der Mantelinnenwandoberfläche oder der Bodeninnenoberfläche und der Mantelinnenwandoberfläche mit plattenförmigen Deckschichtsegmenten (32), wie etwa Fliesen, die aus einem massiven Naturstein hergestellt worden sind, zum Herstellen des Mantelabschnitts (26) oder des Behälters (12),
**gekennzeichnet durch**
(3) Ausführen einer Oberflächenbearbeitung auf der als Innenwandoberfläche (16) vorgesehenen Oberfläche des Natursteins (18), wobei **durch** die Oberflächenbearbeitung die Rauhigkeit und/oder die spezifische Oberfläche der Innenwandoberfläche vergrößert wird.

11. Verfahren nach Anspruch 10, wobei der Block aus Beton oder einem ausgehärteten Kunststein hergestellt worden ist, und/oder
wobei das Verfahren auf das Herstellen eines Mantelabschnitts (26) für einen Behälter (12) gerichtet ist, und wobei im Schritt (1) der Block im Wesentlichen rohrförmig bereitgestellt wird.

12. Verfahren nach einem der Ansprüche 6 bis 11, wobei die Oberflächenbearbeitung ein Stocken, ein Scharrieren, ein Spitzen und/oder ein Flammen umfasst.

13. Verwendung eines Flüssigkeitsbehälters (10) gemäß einem der Ansprüche 1 bis 5 zum Herstellen und/oder Lagern einer zum Trinkkonsum vorgesehenen Flüssigkeit, insbesondere einer alkoholhaltigen Flüssigkeit, wie etwa Wein, Fruchtwein oder andere aus dem Saft von Weintrauben oder Früchten herstellbare Getränke, Schnaps, Whisky, Bier oder ein Mischgetränk.

14. Verfahren zur Herstellung und/oder Lagerung einer zum Trinkkonsum vorgesehenen Flüssigkeit oder eines Vorprodukts für eine derartige Flüssigkeit, mit den folgenden Schritten:
(i) Bereitstellen eines Flüssigkeitsbehälters (10) gemäß einem der Ansprüche 1 bis 5,
(ii) Abkühlen von zumindest einem Teilbereich des Flüssigkeitsbehälters (10) einschließlich des Mantelabschnitts (26) und des Bodenabschnitts (22) und vorzugsweise des Deckels (36), in Bezug auf die Temperatur der umgebenden Luftatmosphäre, vorzugsweise in den Temperaturbereich von 6°C bis 12°C, mehr bevorzugt in den Temperaturbereich von 8°C bis 10°C,
(iii) Einfüllen einer Flüssigkeit in den gemäß Schritt (ii) abgekühlten Flüssigkeitsbehälter (10), und
(iv) Initiieren eines Schritts einer chemischen und/oder biochemischen Umwandlung der eingefüllten Flüssigkeit, wie etwa eine Fermentation oder eine Vergärung, zum Erzeugen der Flüssigkeit oder des Vorprodukts, wobei während der Umwandlung keine weiteren Maßnahmen bzw. Prozesse zur Kühlung des Flüssigkeitsbehälters (10) und/oder der sich in dem Flüssigkeitsbehälter (10) befindenden Flüssigkeit ausgeführt werden.

15. Verfahren nach Anspruch 14, ferner **gekennzeichnet durch** den folgenden Schritt:
(v) in dem Flüssigkeitsbehälter (10), mit einem im Schritt (iv) erhaltenen Vorprodukt, Initiieren, Durchführen und/oder Abwarten von weiteren Verarbeitungs- und oder Bearbeitungsschritten, wie etwa einem Reifungsprozess, zum Erzeugen der zum Trinkkonsum vorgesehenen Flüssigkeit.

## Claims

1. Liquid container (10) for producing and/or storing of liquids, especially alcohol-containing liquids, provided for drinking consumption, wherein the liquid container (10) comprises a container (12) that is open at one, especially upper, side and that has a container wall (14) having an inner wall surface (16), wherein the inner wall surface (16) is formed at least partially, especially substantially entirely, as a surface of a solid natural stone (18), **characterized in that** a portion of the inner wall surface (16) has been generated by means of cleaving or drilling or sawing of the natural stone or the natural stone has been treated with a sandblast and consequently has had a first surface roughness, and has subsequently been subjected to a surface conditioning treatment that has resulted **in that** the roughness of the conditioned inner wall surface (16) has been increased with respect to the first roughness that has been generated by means of cleaving or drilling or sawing or the treatment with a sandblast.

2. Liquid container according to claim 1, **characterized**
**in that** the inner wall surface (16) comprises a surface, which has been bush hammered, chiselled, pointed and/or flame-chipped by means of performing a surface conditioning step, and/or
**in that** the natural stone (18) is granite or basalt and especially not a high-lime natural stone, such as marble.

3. Liquid container according to claim 1 or 2, **characterized by** a lid (36) for covering the open side of the container (12),
wherein the lid (36) has a lid surface (38) that is provided as a lid section of the inner wall surface of the liquid container and that is formed substantially entirely as a surface of a solid natural stone (18), and/or
wherein the lid (36) is made substantially entirely, especially as a mono block, of a solid natural stone (18), and/or
wherein the lid (36) comprises a lid bearing layer (40) and a lid covering layer (42) arranged at an internal side of the lid bearing layer (40), wherein the lid covering layer (42) is essentially entirely, especially as a mono block, made of a solid natural stone (18).

4. Liquid container according to any one of the claims 1 to 3, **characterized in that**
the container wall (14) of the container (12) is made substantially entirely, especially as a mono block (20), of a solid natural stone (18), or
**in that** the container wall (14) of the container (12) comprises a bottom section (22) and a sheath section (26),
wherein the sheath section (26) is made substantially cylinder-shaped and essentially entirely, especially as a mono block, of a solid natural stone (18), or
wherein the sheath section (26) is subdivided in a circumference direction and/or in a direction, for example axial direction, that points to the open side of the container (12), in at least two adjoining sheath segments (34), and/or
wherein the bottom section (22) is made substantially plate-shaped and substantially entirely, especially as a mono block, of a solid natural stone (18).

5. Liquid container according to any one of the claims 1 to 3,
**characterized in that** the container wall (14) comprises a bearing layer (28) and a covering layer (30) arranged at an internal side of the bearing layer (28),
wherein the covering layer (30) is at least partially, especially essentially entirely, for example as a mono block, formed as an inner surface formed as a surface of a solid natural stone (18), or
wherein the covering layer (30) of the container wall (14) is subdivided in a circumference direction and/or in a direction, for example axial direction, that points to the open side of the container (12), in at least two adjoining covering layer segments (32), and/or
wherein the bearing layer (38) is formed of concrete (66) or of a castable and/or mouldable, curable artificial stone.

6. Method for manufacturing a liquid container (10) for producing and/or storing of liquids, particularly alcohol-containing liquids, provided for drinking consumption, wherein an inner wall surface (16) of the liquid container (10) is formed at least partially, especially substantially entirely, as a surface of a solid natural stone (18), wherein the method comprises the following steps:
(a) providing a block consisting of a solid natural stone, and
(b) by means of a first hollow drill core drillbit having a first outer diameter (2*r₁ₐ), in the block, drilling out an essentially cylinder-shaped first inner wall surface (16-1) having a first inner diameter that corresponds nominally to the first outer diameter of the hollow drill core drillbit, wherein the first inner wall surface (16-1) is provided, directly or, if applicable after performing a surface conditioning step, as an inner wall surface (16) of a first sheath section (26-1) of a first liquid container,
**characterized by**
(c) performing a surface conditioning treatment on the surface of the natural stone (18) that is provided as the inner wall surface (16), wherein the roughness of the surface and/or the specific surface of the surface is increased by the surface conditioning treatment.

7. Method according to claim 6, further **characterized by** the following step:
(d) providing a bottom section (22) of a solid natural stone (18) having an essentially plane surface, that is provided, directly or, if applicable, after performing a surface conditioning step, as a bottom section of the inner wall surface of the first liquid container, and wherein in step (b) an essentially cylinder-shaped drill core consisting of solid natural stone and having a first outer diameter is generated, wherein the first outer diameter corresponds nominally to an inner diameter (2*r₂ᵢ) of the first hollow drill core drillbit, and wherein the method further comprises the following step:
(e) into the essentially cylinder-shaped drill core consisting of solid natural stone obtained in step (b), by means of a second hollow drill core drillbit having a second outer diameter (2*r₂ₐ) that is smaller than the first outer diameter (2*r₁ₐ) by a predetermined value, and coaxially to the drill boring performed in step (b), drilling out an essentially cylinder-shaped second inner wall surface (16-2) having a second inner diameter, such that a cylinder sheath that consists of solid natural stone (18) and that is usable as a sheath section (26-2) of a second liquid container arises, a second inner wall surface (16-2) of which is provided, directly or, if applicable, after performing a surface conditioning step, as an inner wall surface of the sheath section (26-2) of the second liquid container.

8. Method for manufacture of a liquid container (10) for producing and/or storing of liquids, especially alcohol-containing liquids, provided for drinking consumption, wherein an inner wall surface of the liquid container is at least partially, especially substantially entirely, formed as a surface of a solid natural stone, wherein the method comprises the following steps:
(A) providing a block consisting of a solid natural stone, which block is formed substantially plate-shaped in at least a partial section thereof and has two plate surfaces (54) that are arranged substantially parallel to each other.
(B) out of the plate-shaped partial section, cutting out at least two longitudinal sections (56), each of which have two longitudinal side surfaces (58), wherein the longitudinal side surfaces, with respect to one of the plate surfaces, either form a right angle (60') or form an acute angle (60) and are mutually inclined with respect to the one of the plate surfaces (54), in order to enable that the at least two longitudinal sections (56) can be arranged in a mitredly adjoining way, and
(C) arranging three or more longitudinal sections (56) that have been obtained from the steps (A) and (B) to form a hollow body, such that plate surfaces (54) of the longitudinal sections (56) arranged on the inner side of the hollow body are provided as an inner wall surface (16) of a sheath section (26) of the liquid container,
**characterized by**
(D) performing a surface conditioning treatment on the surface of the natural stone (18) that is provided as the inner wall surface (16), wherein the roughness of the surface and/or the specific surface of the surface is increased by the surface conditioning treatment.

9. Method according to claim 8, further **characterized by** the following step:
(E) encapsulating or overmoulding the hollow body obtained in step (C) with concrete (66) or with a castable and/or mouldable, curable artificial stone, and letting harden the concrete (66) or the artificial stone, such that an outer mantle surface (62) of the hollow body obtained in step (C) is covered substantially entirely with cured concrete (66) or with cured artificial stone, in order to manufacture the sheath section,
and in particular further **characterized by** the following steps:
(F) providing a bottom section (22) formed as a bottom plate, of which at least one side provided as the inner wall surface is substantially entirely formed as a surface of a solid natural stone (18), and
(G) connecting the bottom section (22) in a liquid-tight manner with an end section of the hollow body obtained in step (C) or in step (D), such that a container (12) arises, which is open at the other end section of the hollow body.

10. Method for manufacturing a container (12), or a sheath section (26) for a container (12), of a liquid container (10) for producing and/or storing of liquids, especially alcohol-containing liquids, provided for drinking consumption, wherein an inner wall surface of the sheath section (26) or of the container (12) is formed at least partially, especially substantially entirely, as a surface of a solid natural stone, wherein the method comprises the following steps:
(1) providing a block having a substantially cylinder-shaped sheath inner wall surface or having a bottom inner surface and a substantially cylinder-shaped sheath inner wall surface, as a bearing layer (28) of the sheath section (26) or of the container (12), and
(2) lining substantially area-widely the sheath inner wall surface or the bottom inner surface and the sheath inner wall surface with plate-shaped covering layer segments (32), such as tiles that have been made of a solid natural stone, for manufacturing (or thereby obtaining) the sheath section (26) or the container (12),
**characterized by**
(3) performing a surface conditioning treatment on the surface of the natural stone (18) that is provided as the inner wall surface (16), wherein the roughness of the surface and/or the specific surface of the surface is increased by the surface conditioning treatment.

11. Method according to claim 10, wherein the block has been made of concrete or a cured artificial stone, and/or
wherein the method is directed to the manufacturing of a sheath section (26) for a container (12), and wherein in step (1) the block is provided in a substantially tubular shape.

12. Method according to any one of the claims 6 to 11, wherein the surface conditioning treatment comprises a bush hammering, a chiselling, a pointing and/or a flame-chipping.

13. Use of a liquid container (10) according to any one of the claims 1 to 5 for producing and/or storing of a liquid provided for drinking consumption, particularly an alcohol-containing liquid, such as wine, fruit wine or other beverages that can be made from the juice of grapes or fruits, schnapps, whisky, beer or a mixed beverage.

14. Method for the production and/or storage of a liquid provided for drinking consumption or of a pre-product for such a liquid, the method comprising the following steps:
(i) providing a liquid container (10) according to any one of the claims 1 to 5,
(ii) cooling down at least a partial section of the liquid container (10) including the sheath section (26) and the bottom section (22), and preferably the lid (36), with respect to the temperature of the surrounding air atmosphere, preferably to the temperature range from 6°C to 12°C, more preferably to the temperature range from 8°C to 10°C,
(iii) filling in of a liquid into the liquid container (10) that has been cooled down according to step (ii), and
(iv) initiating a step of a chemical and/or biochemical conversion of the liquid that has been filled in, such as a fermentation or a conversion of sugar to alcohol, for generating the liquid or a pre-product, wherein during the conversion no further measure (or process) for cooling the liquid container (10) and/or the liquid residing in the liquid container (10) is taken (or performed).

15. Method according to claim 14, further **characterized by** the following step:
(v) in the liquid container (10), with a pre-product obtained in step (iv), initiating, performing and/or awaiting of further conditioning and/or treatment steps, such as a maturing process, for generating the liquid provided for drinking consumption.

## Revendications

1. Récipient (10) de liquide pour la production et/ou le stockage des liquides prévus pour la consommation de boisson, notamment des liquides contenant de l'alcool, dans lequel le récipient (10) de liquide comprend un récipient (12) ouvert à une face, notamment en haut, ayant une paroi (14) de récipient, la paroi ayant une surface (16) intérieure de paroi, dans laquelle la surface intérieure (16) de paroi est formée pour le moins en partie, en particulier entièrement, comme une surface d'une pierre naturelle (18) massive, **caractérisé en ce que** une partie de la surface intérieure (16) de paroi formée de la pierre naturelle est fabriquée dans un premier temps par moyen de fente ou perçage ou sciage de la pierre naturelle ou la pierre naturelle est traitée par un jet de sable et par conséquent présente une première rugosité, et dans un second temps a été soumise à un traitement de surface, laquelle a conférée que la rugosité de la surface intérieure (16) de paroi traitée a été agrandie par référence à la première rugosité laquelle a été fabriquée dans le premier temps par moyens de la fente ou le perçage ou le sciage ou le traitement par le jet de sable.

2. Récipient (10) de liquide selon la revendication 1, **caractérisé**
**en ce que** la surface intérieure (16) de paroi comprend une surface laquelle a été piétinée, grenelée, acérée et/ou flambée par l'exécution d'une étape de traitement de surface et/ou
**en ce que** la pierre naturelle (18) est le granit ou le basalte et en particulier pas de la pierre naturelle riche en chaux, comme par exemple le marbre.

3. Récipient (10) de liquide selon la revendication 1 ou 2, **caractérisé par** un couvercle (36) pour la couverture de la face ouverte du récipient (12),
dans lequel le couvercle (36) présente une surface (38) du couvercle prévue comme une section du couvercle de la surface intérieure (16) de paroi du récipient de liquide, laquelle est formée essentiellement entièrement comme une surface d'une pierre naturelle (18) massive, et/ou
dans lequel le couvercle (36) est fabriqué essentiellement entièrement, en particulier comme par exemple une partie monobloc, d'une pierre naturelle (18) massive, et/ou
dans lequel le couvercle (36) comprend une couche de base (40) du couvercle et une couche de finition (42) du couvercle disposée à la face intérieure de la couche de base (40) du couvercle, dans laquelle la couche de finition (42) du couvercle est fabriquée essentiellement entièrement, en particulier comme par exemple une partie monobloc, d'une pierre naturelle (18) massive.

4. Récipient (10) de liquide selon l'une des revendications 1 à 3, **caractérisé**
**en ce que** la paroi (14) de récipient du récipient (12) est fabriquée essentiellement entièrement, en particulier comme par exemple une partie monobloc (20), d'une pierre naturelle (18) massive, ou
**en ce que** la paroi (14) de récipient du récipient (12) comprend une section de fond (22) et une section de virole (26).
dans lequel la section de virole (26) est cylindrique et est fabriquée essentiellement entièrement, en particulier comme une partie monobloc, d'une pierre naturelle (18), ou
la section de virole (26) est subdivisée, dans une direction périphérique et/ou dans une direction, par exemple axiale, laquelle montre à la face ouverte du récipient (12), en au moins deux segments de virole (34) contigus, et/ou
dans lequel la section de fond (22) est fabriquée essentiellement en forme de plaque et essentiellement entièrement, en particulier comme une partie monobloc, d'une pierre naturelle (18) massive.

5. Récipient (10) de liquide selon l'une des revendications 1 à 4,
**caractérisé en ce que** la paroi (14) de récipient comprend une couche de base (28) et une couche de finition (30) disposée à une face intérieure de la couche de base (28),
dans laquelle la couche de finition (30) est formée au moins en partie, en particulier entièrement, par exemple comme une partie monobloc, avec une surface intérieure formée comme une surface d'une pierre naturelle (18), ou
dans laquelle la couche de finition (30) est subdivisée, dans une direction périphérique et/ou dans une direction, par exemple axiale, laquelle montre à la face ouverte du récipient (12), en au moins deux segments (32) de couche de finition contigus, et/ou
dans laquelle la couche de base (28) est formée du béton ou d'une pierre artificielle moulable et/ou malléable et durcissable

6. Procédé de fabrication d'un récipient (10) de liquide pour la production et/ou le stockage des liquides prévus pour la consommation de boisson, notamment des liquides contenant de l'alcool, dans lequel une surface intérieure (16) de paroi du récipient (10) de liquide est formée au moins en partie, en particulier essentiellement entièrement, comme une surface d'une pierre naturelle (18) massive, dans lequel le procédé comprend les étapes suivantes :
(a) mettre en place un bloc d'une pierre naturelle massive, et
(b) par moyens d'un premier perceur pour évider une carotte, lequel perceur présente un premier diamètre extérieur (2*r₁ₐ), évider dans le bloc une première surface (16-1) intérieure de paroi ayant un premier diamètre intérieur, lequel correspond nominalement au premier diamètre extérieur du premier perceur pour évider une carotte, cependant la première surface (16-1) intérieure de paroi est prévue comme la surface intérieure (16) de paroi d'une première section de virole (26-1) d'un premier récipient de liquide,
**caractérisé par**
(c) effectuer un traitement de surface sur la surface de la pierre naturelle (18), laquelle surface est prévue comme la surface (16) intérieure de paroi, cependant la rugosité et/ou la surface spécifique de la surface intérieure de paroi est agrandie par le traitement de surface.

7. Procédé selon la revendication 6, **caractérisé de plus par** l'étape suivante :
(d) mettre en place une section de fonds (22) d'une pierre naturelle (18) massive ayant une surface essentiellement plane, laquelle est prévue, directement ou, le cas échéant, après ayant effectué une étape de traitement de surface, comme la section de fonds de la surface intérieure de paroi du premier récipient de liquide,
et dans lequel en particulier dans l'étape (b) une carotte essentiellement cylindrique de pierre naturelle massive ayant un premier diamètre extérieur est produite, dans lequel le premier diamètre extérieur correspond nominalement à un diamètre intérieur (2*r₁ᵢ) du premier perceur pour évider une carotte, et dans lequel le procédé comprend de plus le procédé suivant :
(e) dans la carotte essentiellement cylindrique de pierre naturelle massive obtenue dans l'étape (b), par moyens d'un second perceur pour évider une carotte, lequel perceur présente un second diamètre extérieur (2*r₂ₐ), lequel est plus petit que le premier diamètre extérieur (2*r₁ₐ) par une valeur prédéterminée, et coaxial au forage effectué dans l'étape (b), évider une seconde surface (16-2) intérieure de paroi ayant un second diamètre intérieur de façon qu'une virole de cylindre d'une pierre naturelle (18) massive se produit, laquelle virole de cylindre est utilisable comme une section de virole (26-2) d'un second récipient de liquide, dans laquelle la seconde surface intérieure (16-2) de paroi est prévue comme la surface intérieure de paroi de la section de virole (26-2) du second récipient de liquide.

8. Procédé de fabrication d'un récipient (10) de liquide pour la production et/ou le stockage des liquides prévus pour la consommation de boisson, notamment des liquides contenant de l'alcool, dans lequel une surface intérieure de paroi du récipient de liquide est formée au moins en partie, en particulier essentiellement entièrement, comme une surface d'une pierre naturelle massive, dans lequel le procédé comprend les étapes suivantes :
(A) mettre en place un bloc d'une pierre naturelle massive, lequel bloc est formé, au moins dans une section, essentiellement en forme de plaque et présente deux surfaces (54) de plaque disposées essentiellement parallèlement entre elles,
(B) de la section en forme de plaque, découdre au moins deux sections longitudinales (56), qui présentent respectivement deux face latérales longitudinales (58), cependant les faces latérales longitudinales forment ou un angle droit (60') ou, pour faciliter que les au moins deux sections longitudinales (56) peuvent être disposées adjacentes l'une à l'autre et formant un onglet, un angle aigu (60) et sont inclinées par référence à l'une des surfaces (54) de plaque et
(C) disposer trois ou plus de sections longitudinales (56), qui ont été obtenues par les étapes (A) et (B), en forme d'un corps creux, de façon que des surfaces (55) de plaques des sections longitudinales (56) sont prévues comme la surface intérieure (16) de paroi d'une section de virole (26) du récipient de liquide,
**caractérisé par**
(D) effectuer un traitement de surface sur la surface de la pierre naturelle (18), laquelle surface est prévue comme la surface (16) intérieure de paroi, cependant la rugosité et/ou la surface spécifique de la surface intérieure de paroi est agrandie par le traitement de surface.

9. Procédé selon la revendication 8, **caractérisé de plus par** l'étape suivante :
(E) fondre ou surmouler le corps creux obtenu par l'étape (C) avec du béton (66) ou avec une pierre artificielle moulable et/ou malléable et durcissable, de façon qu'une surface (62) de virole du corps creux obtenu par l'étape (C) est couverte essentiellement entièrement avec du béton (66) durci ou avec de la pierre artificielle durcie afin de fabriquer la section de virole,
et en particulier **caractérisé de plus par** les étapes suivants :
(F) mettre en place une section de fonds (22) formée comme plaque de fonds, de laquelle au moins une face prévue comme la surface intérieure de paroi est formée essentiellement entièrement comme la surface d'une pierre naturelle (18) massive, et
(G) connecter de façon étanche au liquide de la section de fonds (22) avec une zone d'extrémité du corps de creux obtenu dans l'étape (C) ou dans l'étape (E), de façon qu'un récipient (12) se produit, lequel est ouvert à l'autre zone d'extrémité du corps de creux.

10. Procédé de fabrication d'un récipient (12) ou d'une section de virole (26) pour un récipient (12) d'un récipient (10) de liquide pour la production et/ou le stockage des liquides prévus pour la consommation de boisson, notamment des liquides contenant de l'alcool, dans lequel une surface intérieure de paroi de la section de virole (26) ou du récipient (12) est formée au moins en partie, en particulier essentiellement entièrement, comme une surface d'une pierre naturelle massive, dans lequel le procédé comprend les étapes suivantes :
(1) mettre en place un bloc ayant une surface intérieure de paroi de la virole essentiellement cylindrique ou ayant une surface intérieure de fonds et une surface intérieure de paroi de la virole essentiellement cylindrique, comme une couche de base (28) pour la section de virole (26) ou pour le récipient, respectivement, et
(2) revêtir, essentiellement sur l'ensemble de la surface, la surface intérieure de paroi de la virole ou la surface intérieure de fonds et la surface intérieure de paroi de la virole avec des segments (32) de couche de finition, comme des carreaux, lesquelles sont fabriquées d'une pierre naturelle massive afin de fabriquer la section de virole (26) ou le récipient (12),
**caractérisé par**
(3) effectuer un traitement de surface sur la surface de la pierre naturelle (18), laquelle surface est prévue comme la surface (16) intérieure de paroi, cependant la rugosité et/ou la surface spécifique de la surface intérieure de paroi est agrandie par le traitement de surface.

11. Procédé selon la revendication 10, dans lequel le bloc a été fabriqué du béton ou d'une pierre artificielle durcie, et/ou
dans lequel le procédé se porte sur la fabrication d'une section de virole (26) pour un récipient (12), et dans lequel dans l'étape (1), le bloc est mis en place essentiellement tubulaire.

12. Procédé selon l'une des revendications 6 à 1q, dans lequel le traitement de surface comprend une étape de piétiner, de greneler, d'acérer et/ou de flamber.

13. Utilisation d'un récipient (10) de liquide selon l'une des revendications 1 à 5 pour la production et/ou le stockage des liquides prévus pour la consommation de boisson, notamment des liquides contenant de l'alcool, comme par exemple le vin, le vin de fruits ou des autres boissons qui peuvent être produites du jus des grappes ou des fruits, du schnaps, du whisky, de la bière ou une boisson à base d'une mélange.

14. Procédé pour la production et/ou le stockage d'un liquide prévu pour la consommation de boisson ou un précurseur pour un tel liquide, comprenant les étapes suivantes :
(i) mettre en place un récipient (10) de liquide selon l'une des revendications 1 è 5,
(ii) refroidir au moins une section du récipient (10) de liquide y inclus la section de virole (26) et la section de fonds (22) et de préférence le couvercle (36), par référence à la température de l'atmosphère d'air ambiante, de préférence dans le domaine des températures de 6°C à 12°C, plus préféré dans le domaine des températures de 8°C à 10°C,
(iii) verser un liquide dans le récipient (10) de liquide refroidi selon l'étape (ii), et
(iv) initier une étape d'une conversion du liquide versé, comme par exemple une fermentation ou une m/éthanisation, afin de la production du liquide ou du précurseur, cependant aucuns des mesures et/ou des processus de refroidissment du récipient (10) de liquide et/ou du liquide disposé dans le récipient (10) de liquide sont effectués pendant la conversion.

15. Procédé selon la revendication 14, **caractérisé par** l'étape suivante ;
(v) dans le récipient (10) de liquide, par moyens d'un précurseur obtenu dans l'étape (iv), initier, effectuer et/ou attendre des étapes de traitement et/ou d'élaboration, comme par exemple un processus de maturation, afin de la production du liquide prévu pour la consommation de boisson.
